(19) 

Europäisches Patentamt
European Patent Office
Office européen des brevets

(11) **EP 4 319 253 A1**

(12) **EUROPEAN PATENT APPLICATION**
published in accordance with Art. 153(4) EPC

(43) Date of publication:
**07.02.2024 Bulletin 2024/06**

(21) Application number: **22827350.4**

(22) Date of filing: **02.06.2022**

(51) International Patent Classification (IPC):
**H04W 24/02** (2009.01)

(52) Cooperative Patent Classification (CPC):
**H04W 24/02; H04W 24/08**

(86) International application number:
**PCT/CN2022/096722**

(87) International publication number:
**WO 2022/267853 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.06.2021 CN 202110691655**

(71) Applicant: **Huawei Technologies Co., Ltd.
Longgang
Shenzhen, Guangdong 518129 (CN)**

(72) Inventors:
- **GUO, Senbao
  Shenzhen, Guangdong 518129 (CN)**
- **LI, Guibao
  Shenzhen, Guangdong 518129 (CN)**
- **LE, Chunhui
  Shenzhen, Guangdong 518129 (CN)**

(74) Representative: **Maiwald GmbH
Engineering
Elisenhof
Elisenstrasse 3
80335 München (DE)**

(54) **CHANNEL PHASE CORRECTION METHOD AND RELATED APPARATUS**

(57) This application provides a channel phase calibration method and a related apparatus. The method may include: A first communication device sends reference signals to a second communication device through a plurality of channels (610). The second communication device performs channel measurement by using the reference signals, and feeds back channel measurement information to the first communication device (620). The first communication device estimates a phase difference between a first channel and a second channel in the plurality of channels based on the channel measurement information fed back by the second communication device (630), and obtains, based on the phase difference between the first channel and the second channel, a phase compensation value of a channel other than the first channel and the second channel in the plurality of channels (640), to calibrate a phase of the channel other than the first channel and the second channel in the plurality of channels. Through cooperation between the first communication device and the second communication device, that is, according to an air interface calibration technical solution, a phase difference between channels can be calibrated without additional hardware.

600

First communication device — Second communication device

610: Send reference signals through a plurality of channels, where the reference signals are used for channel measurement

620: Channel measurement information

630: Obtain a phase difference between a first channel and a second channel based on the channel measurement information, where the plurality of channels include the first channel and the second channel

640: Obtain, based on the phase difference between the first channel and the second channel, a phase compensation value of a channel other than the first channel and the second channel

FIG. 6

## Description

This application claims priority to Chinese Patent Application No. 202110691655.8, filed with the China National Intellectual Property Administration on June 22, 2021 and entitled "CHANNEL PHASE CALIBRATION METHOD AND RELATED APPARATUS", which is incorporated herein by reference in its entirety.

## TECHNICAL FIELD

This application relates to the wireless communication field, and more specifically, to a channel phase calibration method and a related apparatus.

## BACKGROUND

There is a phase difference between a plurality of channels in one channel group. To ensure performance of a communication system, a phase of a channel may be usually calibrated, so that a phase difference between channels meets a preset condition.

Generally, the phase of the channel may be calibrated in a manner of combining hardware and software. For example, when phase calibration is performed on a transmit channel, signal streams are sent through a plurality of channels on a baseband, and the signal streams pass through a remote radio unit (remote radio unit, RRU) and reach a coupler at a calibration port on a channel side. The coupler splices the signal streams of the plurality of channels in time domain and frequency domain, so that calibrated signals of different channels are orthogonal in time domain or orthogonal in frequency domain. Then, the signals are fed back to the baseband through a calibration channel on an RRU side for phase difference calculation. This method requires that the channel has a calibration port and the RRU has a calibration channel, which increases hardware costs.

## SUMMARY

This application provides a channel phase calibration method and a related apparatus, so that a phase difference can be calibrated without additional hardware.

According to a first aspect, a communication method is provided. The method may be performed by a communication device (for example, a network device or a terminal device), or may be performed by a chip or a circuit used for a communication device, or may be implemented by a logical module or software that can implement all or some functions of the communication device. This is not limited in this application. For description, the following mainly uses a first communication device as an example for description.

The method may include: sending reference signals to a communication device through a plurality of channels, where the reference signals are used for channel measurement; receiving channel measurement information from the communication device; obtaining a phase difference between a first channel and a second channel based on the channel measurement information, where the plurality of channels include the first channel and the second channel; and obtaining, based on the phase difference between the first channel and the second channel, a phase compensation value of a channel other than the first channel and the second channel.

For example, before the obtaining a phase difference between a first channel and a second channel, the method may further include: obtaining phases of the plurality of channels based on the channel measurement information.

Based on the foregoing technical solution, a first communication device sends reference signals to a second communication device, and the second communication device performs channel measurement by using the reference signals, and feeds back channel measurement information. The first communication device estimates a phase of each channel based on the channel measurement information fed back by the second communication device, and calibrates the phase of the channel. For example, the first communication device obtains, based on the phase difference between the first channel and the second channel, the phase compensation value of the channel other than the first channel and the second channel in the plurality of channels, so that the phase difference between the channels meets a specific condition. Through cooperation between the first communication device and the second communication device, that is, by using an air interface calibration technical solution, the phase difference between channels can be calibrated without additional hardware, for example, without depending on a calibration port on an antenna side, a calibration channel on an RRU side, and a radio phase calibration unit (radio phase calibration unit, RPCU), so that hardware costs can be reduced.

With reference to the first aspect, in some implementations of the first aspect, data is sent to one or more communication devices through the plurality of channels, where a phase of the channel other than the first channel and the second channel in the plurality of channels is a phase that is compensated by using the phase compensation value.

For example, the one or more communication devices may include a communication device participating in phase calibration (that is, the communication device that feeds back the channel measurement information) and/or another communication device (for example, a communication device that is located in a same cell as the communication device participating in phase calibration).

Based on the foregoing technical solution, after obtaining the phase compensation value of the channel other than the first channel and the second channel in the plurality of channels, the first communication device may compensate the obtained phase compensation value for the channels when sending the data. Data transmission performance can be improved through the channel obtained after phase difference calibration, and impact of the phase difference on communication performance can be reduced as much as possible.

With reference to the first aspect, in some implementations of the first aspect, the obtaining a phase difference between a first channel and a second channel based on the channel measurement information includes: obtaining, based on the channel measurement information, an eigenvector corresponding to a correlation matrix between the plurality of channels; and determining the phase difference between the first channel and the second channel based on elements that are in the eigenvector and that correspond to the first channel and the second channel; and the obtaining, based on the phase difference between the first channel and the second channel, a phase compensation value of a channel other than the first channel and the second channel includes: obtaining, based on the phase difference between the first channel and the second channel and an element that is in the eigenvector and that corresponds to the channel other than the first channel and the second channel, the phase compensation value of the channel other than the first channel and the second channel.

Based on the foregoing technical solution, when the phase and the phase compensation value of the channel are calculated, the phase and the phase compensation value of the channel may be calculated by using the eigenvector of the correlation matrix and an element corresponding to each channel in the eigenvector. This can reduce implementation complexity.

With reference to the first aspect, in some implementations of the first aspect, the sending reference signals to a communication device through a plurality of channels includes: sending, in a plurality of time periods, the reference signals to the communication device through the plurality of channels; and the channel measurement information includes channel measurement information corresponding to the reference signals sent in the plurality of time periods.

For example, the channel measurement information corresponding to the reference signals indicates channel measurement information obtained by performing channel measurement based on the reference signals, or channel measurement information that is fed back by the second communication device to the first communication device after the second communication device performs channel measurement based on the reference signals. That the channel measurement information includes channel measurement information corresponding to the reference signals sent in the plurality of time periods may be understood as that the first communication device receives the channel measurement information that is fed back by the second communication device based on the reference signals sent in the plurality of time periods. In other words, the second communication device performs channel measurement based on the reference signals sent in the plurality of time periods, and feeds back the channel measurement information to the first communication device, so that the first communication device receives the channel measurement information.

Based on the foregoing technical solution, the first communication device may send the reference signals to the second communication device for a plurality of times, for example, send the reference signals in a plurality of phases (or a plurality of times, or a plurality of time periods). For example, the first communication device sends the reference signals to the second communication device in a plurality of time periods through a plurality of channels. In this way, a phase and a phase compensation value of each channel are estimated by using channel measurement information fed back for a plurality of times, and precision is high.

With reference to the first aspect, in some implementations of the first aspect, the sending reference signals to a communication device through a plurality of channels includes: sending the reference signals to a plurality of communication devices through the plurality of channels; and the receiving channel measurement information from the communication device includes: receiving channel measurement information from the plurality of communication devices.

For example, phase compensation values are separately estimated based on channel measurement information fed back by different communication devices, and an average value is obtained for the phase compensation values estimated by the different communication devices.

For another example, when the phase and the phase compensation value of each channel are calculated, calculation may be performed based on the channel measurement information fed back by the plurality of communication devices.

Based on the foregoing technical solution, the first communication device may calculate the phase compensation value of each channel based on assistance of the plurality of communication devices. This can further improve phase estimation precision.

With reference to the first aspect, in some implementations of the first aspect, the plurality of channels include a channel in a first polarization direction and a channel in a second polarization direction; and the sending the reference signals to a communication device through a plurality of channels, and receiving channel measurement information from the communication device includes: sending, in a first time period, the reference signals to the communication device through the channel in the first polarization direction, and sending, in a second time period, the reference signals to the communication device through the channel in the second polarization direction.

For example, in the first time period, channel measurement information of the reference signals that is sent by the communication device based on the channel in the first polarization direction is received, and in the second time period, channel measurement information of the reference signals that is sent by the communication device based on the channel in the second polarization direction is received.

Based on the foregoing technical solution, channels in two polarization directions are divided into two groups, and each group is separately trained (that is, phase calibration is performed on each group), so that training can be performed in different time periods. This can effectively reduce a channel dimension, reduce a training time, and can increase a quantity of communication devices that can be used for training.

With reference to the first aspect, in some implementations of the first aspect, the sending reference signals to a communication device through a plurality of channels includes: sending the reference signals to the communication device X times through the plurality of channels, where the reference signals are reference signals obtained after weighting is performed based on a same calibration weight, and X is an integer greater than 1; the receiving channel measurement information from the communication device includes: receiving the channel measurement information from the communication device X times, where the received X times of channel measurement information respectively correspond to the X times of sent reference signals; and the obtaining a phase difference between a first channel and a second channel based on the channel measurement information includes: obtaining phases of the plurality of channels based on channel measurement information received Y times of X times, where Y is an integer greater than 1 or equal to 1 and less than X.

The receiving the channel measurement information from the communication device X times may be understood as, for example, receiving the channel measurement information X times, where the X times of channel measurement information respectively correspond to the X times of reference signals. That is, the second communication device feeds back the channel measurement information once each time the second communication device receives the reference signals.

For example, Y times may be a $Y^{th}$ time of the X times. For example, Y times are the last Y times of X times, for example, the last time.

For another example, Y times are one or more of X times.

For example, the phases of the plurality of channels are obtained based on Y times of channel measurement information in the X times of channel measurement information.

Based on the foregoing technical solution, a network device may weight reference signals by using a same calibration weight, repeatedly send reference signals weighted by using the calibration weight for a plurality of times, and select feedback results of one or more times to perform phase calibration. This can avoid, as much as possible, that a measurement result at a moment is correlated with measurement results at previous several moments due to a filtering operation of the communication device, and consequently, a restored correlation matrix may be biased, causing inaccurate phase estimation. In this manner, phase estimation precision can be further improved, and accuracy of calibration of a phase difference between channels can be improved.

With reference to the first aspect, in some implementations of the first aspect, the sending reference signals to a communication device through a plurality of channels includes: sending weighted reference signals to the communication device through the plurality of channels.

Based on the foregoing technical solution, the first communication device may first perform weighting processing on the reference signals, and then send the weighted reference signals to the second communication device. Therefore, when estimating the phase of each channel, the first communication device may calculate the correlation matrix between the channels by using the calibration weight used for weighting the reference signals, and estimate the phase of each channel based on the correlation matrix.

With reference to the first aspect, in some implementations of the first aspect, the channel measurement information includes one or more of the following: a precoding matrix indicator, a rank indicator, and a channel quality indicator.

Based on the foregoing technical solution, the second communication device may feed back one or more of the precoding matrix indicator, the rank indicator, and the channel quality indicator to the first communication device. This complies with a stipulation of a related communication protocol, and can reduce feedback resource overheads.

With reference to the first aspect, in some implementations of the first aspect, The channel measurement information is measurement information fed back based on a subband, or the channel measurement information includes measurement information fed back based on a subband and measurement information fed back based on a broadband.

Based on the foregoing technical solution, when the fed-back channel measurement information includes the measurement information fed back based on the subband, the first communication device calculates a correlation matrix of the subband by using the measurement information fed back by the second communication device based on the subband, and then calculates a channel phase and a phase compensation value of the subband. This can effectively resolve a phase error caused by an inter-channel delay difference.

According to a second aspect, a communication apparatus is provided. The communication apparatus is configured to perform the method provided in the first aspect. Specifically, the apparatus may include units and/or modules configured to perform the method provided in the first aspect, for example, a processing unit and/or a communication unit.

In an implementation, the apparatus is a communication device (for example, a network device or a terminal device). When the apparatus is the communication device, the communication unit may be a transceiver or an input/output interface; and the processing unit may be a processor. Optionally, the transceiver may be a transceiver circuit. Optionally, the input/output interface may be an input/output circuit.

In another implementation, the apparatus is a chip, a chip system, or a circuit in a communication device (for example, a network device or a terminal device). When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

According to a third aspect, a communication apparatus is provided. The apparatus includes: a memory, configured to store a program; and a processor, configured to execute a computer program or instructions stored in the memory. When the computer program or the instructions stored in the memory is executed, the processor is configured to perform the method provided in the first aspect.

In an implementation, the apparatus is a communication device (for example, a network device or a terminal device).

In another implementation, the apparatus is a chip, a chip system, or a circuit used in a communication device.

According to a fourth aspect, this application provides a processor, configured to perform the method provided in the first aspect. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the foregoing information, the processor outputs the foregoing information to an interface, and transmits the information through the interface. After the information is output by the processor, other processing may further need to be performed on the information before the information arrives at the interface. Similarly, when the processor receives the foregoing inputted information, the interface obtains/receives the foregoing information, and inputs the foregoing information into the processor. Further, after the interface receives the foregoing information, other processing may need to be performed on the foregoing information before the information is input into the processor.

Unless otherwise specified, or if operations such as transmission, sending, and obtaining/receiving do not conflict with actual functions or internal logic in related descriptions, the operations may be understood as operations such as outputting, receiving, and inputting, or may be understood as transmission, sending, and receiving operations performed by a radio frequency circuit and an antenna. This is not limited in this application.

In an implementation process, the processor may be a processor specially configured to perform these methods, or may be a processor, for example, a general purpose processor, that executes a computer program or instructions in a memory to perform these methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in embodiments of this application.

According to a fifth aspect, a computer-readable storage medium is provided, where the computer-readable storage medium stores program code to be executed by a device, and the program code includes the method provided in the first aspect.

According to a sixth aspect, a computer program product including instructions is provided. When the computer program product is run on a computer, the computer is enabled to perform the method provided in the first aspect.

According to a seventh aspect, a chip is provided, where the chip includes a processor and a communication interface, and the processor reads, through the communication interface, instructions stored in a memory, to perform the method provided in the first aspect.

Optionally, in an implementation, the chip may further include a memory. The memory stores a computer program or instructions. The processor is configured to execute the computer program or the instructions stored in the memory. When the computer program or the instructions are executed, the processor is configured to perform the method provided in the first aspect.

**BRIEF DESCRIPTION OF DRAWINGS**

FIG. 1 is a schematic diagram of a wireless communication system 100 applicable to an embodiment of this application;

FIG. 2 is a schematic diagram in which phase differences meet a preset condition applicable to an embodiment of this application;

FIG. 3 is a schematic diagram of a phase change caused by a delay difference;

FIG. 4 is a schematic diagram of impact of different maximum phase differences on throughput performance;

FIG. 5 is a schematic diagram of impact of a non-calibrated phase difference and an ideal calibrated phase difference on throughput performance;

FIG. 6 is a schematic diagram of a communication method 600 according to an embodiment of this application;

FIG. 7 is a schematic diagram of pilot signal sending applicable to an embodiment of this application;

FIG. 8 is a schematic diagram of a basic principle applicable to an embodiment of this application;

FIG. 9 is a schematic diagram in which an error occurs in an estimated phase;

FIG. 10 is a schematic diagram of an antenna array;

FIG. 11 is another schematic diagram of an antenna array;

FIG. 12 is a schematic diagram in which channels are grouped and trained independently;

FIG. 13 is a schematic diagram of repeated sending and selecting for correlation matrix calculation;

FIG. 14 is a schematic diagram of estimating a phase error based on a wideband precoding matrix indicator (precoding matrix indicator, PMI) when there is an inter-channel delay difference;

FIG. 15 is a schematic diagram of estimating a phase error based on a subband PMI when there is an inter-channel delay difference;

FIG. 16 is a schematic flowchart of a communication method applicable to an embodiment of this application;

FIG. 17 is a schematic block diagram of a communication apparatus according to an embodiment of this application;

FIG. 18 is a schematic diagram of a structure of a communication apparatus according to an embodiment of this application;

FIG. 19 is a schematic diagram of a chip system according to an embodiment of this application; and

FIG. 20 is a schematic block diagram of a communication system according to an embodiment of this application.

## DESCRIPTION OF EMBODIMENTS

The following describes technical solutions of this application with reference to accompanying drawings.

The technical solutions in embodiments of this application may be applied to various communication systems, for example, a 5th generation (5th generation, 5G) system, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a sixth generation mobile communication system or a satellite communication system.

A terminal device in embodiments of this application may also be referred to as user equipment (user equipment, UE), an access terminal, a subscriber unit, a subscriber station, a mobile console, a mobile station (mobile station, MS), a mobile terminal (mobile terminal, MT), a remote station, a remote terminal, a mobile device, a user terminal, a terminal, a wireless communication device, a user agent, or a user apparatus. The terminal device in embodiments of this application may be a device that provides a user with voice and/or data connectivity, and may be configured to connect a person, an object, and a machine, for example, a handheld device or a vehicle-mounted device with a wireless connection function. The terminal device in embodiments of this application may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may be configured to act as a base station. For example, the UE may act as a scheduling entity that provides sidelink signals between UEs in V2X, D2D, or the like. For example, a cellular phone and a car communicate with each other through a sidelink signal. The cellular phone communicates with a smart home device without relaying a communication signal through a base station.

A network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in a broad sense, or may be replaced with the following names, for example, a NodeB (NodeB), an evolved NodeB (evolved NodeB, eNB), a next generation base station (next generation NodeB, gNB), a relay station, an access point, a transmission reception point (transmitting and receiving point, TRP), a transmission point (transmitting point, TP), a master eNodeB MeNB, a secondary eNodeB SeNB, a multi-standard radio (MSR) node, a home base station, a network controller, an access node, an access point (AP), a transmission node, a transceiver node, a baseband unit (base band unit, BBU), a transceiver node, a remote radio unit (remote radio unit, RRU), an active antenna unit (AAU), a radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that bears a base station function in device-to-device (device-to-device, D2D), vehicle-to-everything (vehicle-to-everything, V2X), and machine-to-machine (machine-to-machine, M2M) communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an unmanned aerial vehicle may be configured as a mobile base station, and one or more cells may move based on a position of the mobile base station. In other examples, a helicopter or an unmanned aerial vehicle may be configured as a device for communicating with another base station.

In some deployments, the network device in embodiments of this application may be a CU or a DU, or the network device includes a CU and a DU. The gNB may further include an active antenna unit (active antenna unit, AAU).

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiment of this application.

It should be understood that the communication device in this application may be a network device, or may be a terminal device. For example, the first communication device is a network device, and the second communication device is a terminal device. For another example, the first communication device is a terminal device, and the second communication device is a network device. For another example, the first communication device is a network device, and the second communication device is a network device. For another example, the first communication device is a terminal device, and the second communication device is a terminal device.

It should be further understood that all or some functions of the communication device in this application may also be implemented by using a software function running on hardware, or may be implemented by using an instantiated virtualization function on a platform (for example, a cloud platform).

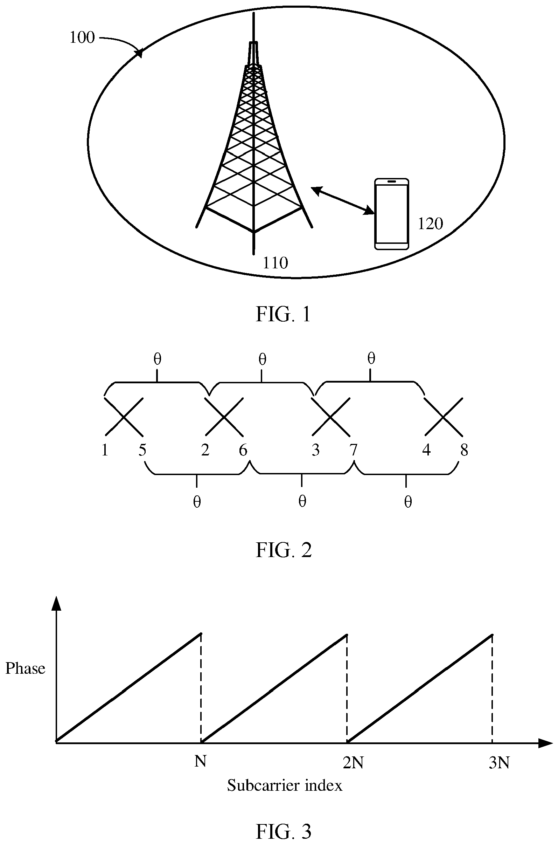

For ease of understanding embodiments of this application, a communication system applicable to embodiments of this application is first described in detail with reference to FIG. 1.

For example, refer to FIG. 1. FIG. 1 is a schematic diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. A plurality of antennas may be configured for the network device and the terminal device. The network device and the terminal device may communicate with each other by using a multi-antenna technology.

When the network device communicates with the terminal device, the network device may manage one or more cells, and there may be one or more terminal devices in one cell. Optionally, the network device 110 and the terminal device 120 form a single-cell communication system. Without loss of generality, a cell is denoted as a cell #1. The network device 110 may be a network device in the cell #1. In other words, the network device 110 may serve a terminal device (for example, the terminal device 120) in the cell #1.

It should be noted that a cell may be understood as an area within coverage of radio signals of the network device.

It should be understood that FIG. 1 is only a simplified schematic diagram of an example for ease of understanding. The wireless communication system 100 may further include another network device or another terminal device, which is not shown in FIG. 1.

It should be further understood that the technical solutions in embodiments of this application may be applied to a multi-antenna system, for example, a 4-antenna system or an antenna system with more than four antennas, or a system in which phases of a plurality of antennas need to be calibrated.

For ease of understanding of embodiments of this application, several basic concepts in embodiments of this application are briefly described. It should be understood that basic concepts described below are briefly described by using a basic concept specified in a current protocol as an example, but embodiments of this application are not limited to being applied only to an existing communication system. Therefore, standard names appearing when the existing communication system is used as an example for description are all function descriptions, and a specific name is not limited.

1. An inter-antenna delay difference may alternatively be referred to as an inter-channel delay difference, and is a delay difference obtained when a signal arrives at a receive end side when a transmit end sends the signal to the receive end through a plurality of channels or a plurality of antennas of one antenna group. The delay difference may also be referred to as an inter-channel delay difference. An inter-antenna delay difference is mainly caused by different lengths of connection lines or different processing delays of different channels or antennas. This results in a delay difference. For brevity, the inter-antenna delay difference is referred to as a delay difference for short in the following.

2. An inter-antenna phase difference may also be referred to as an inter-channel phase difference, and is a phase difference between a plurality of channels or a plurality of antennas in an antenna group. An inter-antenna phase difference is mainly caused by inconsistent initial phases of electromagnetic waves between antennas, and therefore phases between different antennas do not comply with a preset rule. For brevity, the inter-antenna phase difference is referred to as a phase difference for short in the following.

Generally, the phase difference needs to meet a preset condition. The preset condition may be designed according to an actual situation, which is not limited herein. In a possible design, the preset condition includes: In a same polarization direction, phase differences are equal, and in different polarization directions, phase difference values are equal. For example, FIG. 2 is a schematic diagram in which phase differences meet the preset condition applicable to an embodiment of this application.

As shown in FIG. 2, "×" in FIG. 2 is used to represent a cross-polarized antenna unit. The cross-polarized antenna unit may include one or more cross-polarized antennas. The cross-polarized antenna unit may correspond to two polarization directions. As shown in FIG. 2, "/" represents a first polarization direction (or may be referred to as a positive polarization direction), and "\" represents a second polarization direction (or may be referred to as a negative polarization direction). For example, the first polarization direction may be a horizontal polarization direction, and the second polarization direction may be a vertical polarization direction. Alternatively, the first polarization direction may be a +45° polarization direction, and the second polarization direction may be a -45° polarization direction.

It can be learned from FIG. 2 that phase differences between antennas shown in FIG. 2 meets a relationship that, in a same polarization direction, phase differences are equal. For example, for antennas in the first polarization direction, a phase difference between the second column of antennas and the first column of antennas is θ, a phase difference between the third column of antennas and the second column of antennas is θ, and a phase difference between the fourth column of antennas and the third column of antennas is θ. For another example, for antennas in the second polarization direction, a phase difference between the second column of antennas and the first column of antennas is θ, a phase difference between the third column of antennas and the second column of antennas is θ, and a phase difference between the fourth column of antennas and the third column of antennas is θ.

It can be learned from FIG. 2 that the phase difference shown in FIG. 2 meets that, in different polarization directions, phase difference values are equal. For example, in the first polarization direction and the second polarization direction, a phase difference between adjacent antennas is θ.

Generally, a phase difference may be calibrated (or adjusted), so that the phase difference meets a preset condition, for example, meets a condition shown in FIG. 2. Specifically, for example, a phase of a channel or an antenna is calibrated (or adjusted), so that a phase difference between channels or between antennas meets a preset condition. In the following description, a channel is used for description. It may be understood that the channel may also be replaced with an antenna.

However, in some cases, for example, when a phase difference measurement is performed by using a full bandwidth, a calibration error may occur in the phase difference. The following provides descriptions with reference to FIG. 3 by using examples.

A delay difference causes additional channel frequency selective fading, that is, the phase values of channels in different frequency bands are different, and periodic effects are generated in the case of broadband. For example, FIG. 3 is a schematic diagram of a phase change caused by a delay difference. In FIG. 3, a vertical axis represents a phase, and a horizontal axis represents a subcarrier index, for example, N, 2N, and 3N separately. As shown in FIG. 3, a phase is rotated by one circle at an interval of N subcarriers. In this case, if the phase difference measurement is performed by using a full bandwidth, a large error may be caused. For example, if a full-bandwidth average phase difference is 0, and an actual subband phase difference is large, a phase difference calibration error is caused.

If the phase difference is not calibrated, inter-user interference may be caused and cell coverage may change. This causes inter-cell interference and affecting communication performance.

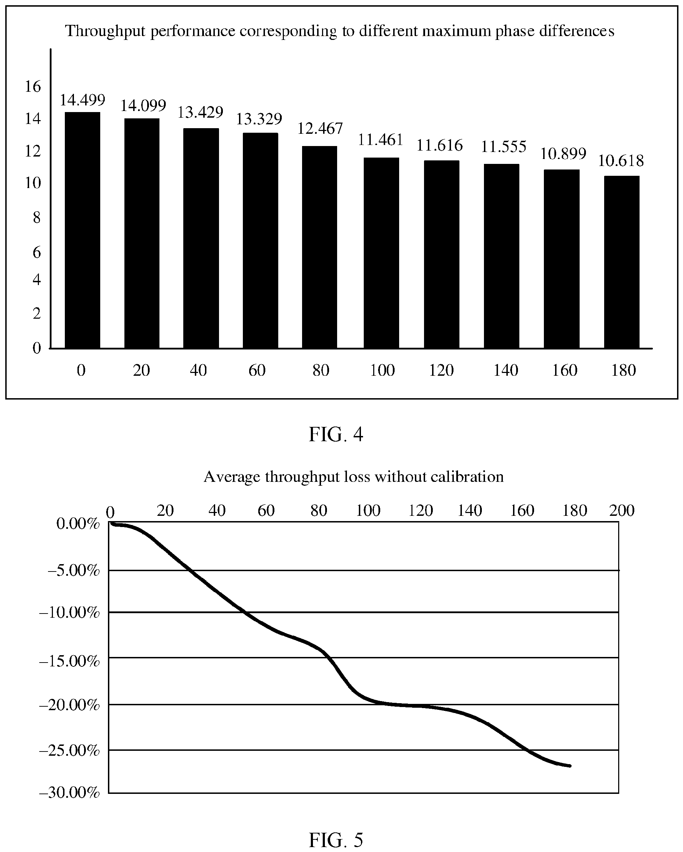

Generally, it is considered that phase differences comply with uniform distribution (-180 degrees to 180 degrees). For example, FIG. 4 is a schematic diagram of impact of different maximum phase differences on throughput performance, and FIG. 5 is a schematic diagram of impact of a non-calibrated phase difference and an ideal calibrated phase difference on throughput performance. In FIG. 4, a horizontal axis represents a maximum phase difference, in a unit of degree; a vertical axis represents throughput, in a unit of bit per second (bit per second, bps); in FIG. 5, a horizontal axis represents a maximum phase difference, in a unit of degree; and a vertical axis represents a throughput performance loss, and represents a proportion compared with a throughput performance loss of ideal calibration. As shown in FIG. 4, as the maximum phase difference increases, the throughput gradually decreases. For example, when the maximum phase difference is 0, the throughput is 14.499 bps; and when the maximum phase difference increases to 180 degrees, the throughput decreases to 10.618 bps. As shown in FIG. 5, compared with ideal calibration (that is, the phase difference is 0), when a phase difference is not calibrated, a throughput performance loss may reach about 30%.

Therefore, a phase difference needs to be calibrated to ensure system performance.

It should be understood that FIG. 4 and FIG. 5 are merely an example for description, and does not limit the protection scope of embodiments of this application.

Generally, phase calibration may be performed in a manner of self-sending and receiving by a base station. For example, when a phase of a transmit channel is calibrated, signal streams are sent through a plurality of channels on a baseband, and the signal streams pass through an RRU and reaches a coupler at a calibration port on an antenna side. The coupler splices signal streams of the plurality of channels in time domain and a frequency domain, so that calibrated signals of different channels are orthogonal in time domain or in frequency domain. Then, the signal is fed back to the baseband through a calibration channel on the RRU side for phase difference calculation. In the foregoing manner, the antenna needs to have a calibration port, the RRU needs to have a calibration channel, and the baseband further needs to suspend a service to receive and send a calibration signal. This increases hardware costs and affects service continuity.

In view of this, this application provides a solution. Through cooperation between a network device and a terminal device, phase calibration can be implemented without additional hardware, and calibration precision can be improved as much as possible.

The following describes in detail embodiments provided in this application with reference to the accompanying drawings.

It should be understood that, in embodiments of this application, "calibrate a phase difference between channels" and "calibrate a phase of a channel" are mentioned for a plurality of times, and a person skilled in the art should understand meanings. Specifically, a phase difference between channels may be calibrated by calibrating a phase of the channels, so that the phase difference between channels meets a preset condition, as shown in the preset condition in FIG. 2.

It should be further understood that, in the following embodiments, for uniformity, a channel is used for description. It may be understood that a channel may also be replaced with an antenna. In addition, "a plurality of channels" are mentioned in the following for a plurality of times, and represents channels on which phase calibration is to be performed, or represents channels on which whether phase calibration is to be performed is to be determined.

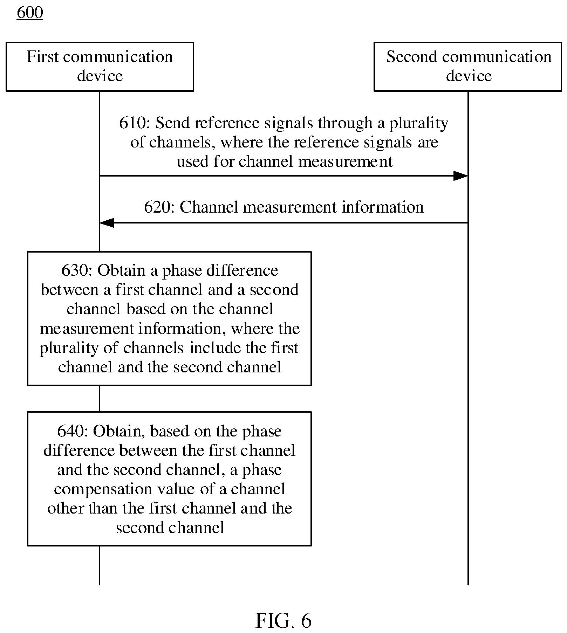

FIG. 6 is a schematic diagram of a communication method 600 according to an embodiment of this application. A first communication device and a second communication device are used as an example, the method 600 may include the following steps.

610: The first communication device sends reference signals to the second communication device through a plurality of channels, where the reference signals are used for channel measurement. Correspondingly, the second communication device receives the reference signals.

The reference signals are reference signals used for channel measurement. For example, the reference signals are reference signals used for downlink channel measurement, for example, channel state information reference signals (channel state information reference signal, CSI-RS). For another example, the reference signals are reference signals used for uplink channel measurement, for example, sounding reference signals (sounding reference signal, SRS).

A form of the communication device is not limited in this embodiment of this application.

For example, the first communication device is a network device, and the second communication device is a terminal device. In this example, the reference signals may be reference signals used for downlink channel measurement, for example, CSI-RSs.

For another example, the first communication device is a terminal device, and the second communication device is a network device. In this example, the reference signals may be reference signals used for uplink channel measurement, for example, SRSs.

It should be understood that the foregoing is merely an example for description. The first communication device and the second communication device may alternatively be devices of a same type. For example, the first communication device and the second communication device are network devices, or the first communication device and the second communication device are terminal devices. When the first communication device and the second communication device are devices of a same type, the reference signals may be signals measured between devices of the same type.

In this embodiment of this application, the first communication device may be understood as a device that performs phase calibration, and the second communication device may be understood as a device that participates in phase calibration, or the second communication device may be understood as a device that cooperates with the first communication device to perform phase calibration. The second communication device may include one or more communication devices. The following describes in detail with reference to manner 2 in aspect 1.

Optionally, the first communication device sends weighted reference signals to the second communication device through the plurality of channels.

For example, the first communication device may first perform weighting processing on the reference signals, and then send weighted reference signals to the second communication device.

A manner of weighting the reference signals may be, for example, multiplying the reference signals by a calibration weight. Reference signals of different channels may be multiplied by a same calibration weight, or may be multiplied by different calibration weights. Alternatively, reference signals of some channels may be multiplied by a same calibration weight, and reference signals of some channels may be multiplied by different calibration weights.

The calibration weight may be, for example, a complex number value. The calibration weight is used by the first communication device to perform calculation by using the calibration weight when the first communication device estimates a phase of a channel. For example, when calculating a correlation matrix between channels, the first communication device may use the calibration weight to perform calculation, to estimate a phase of a channel.

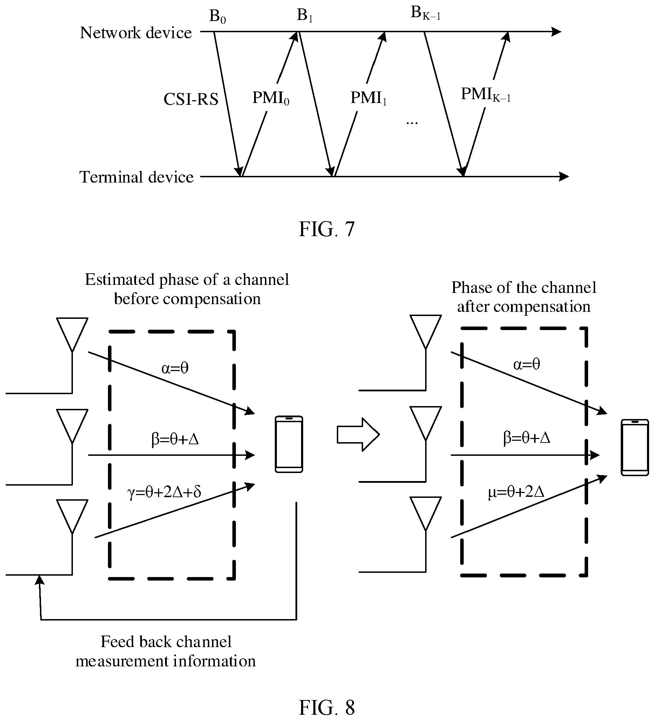

For example, FIG. 7 is a schematic diagram of pilot signal sending applicable to an embodiment of this application. For example, the first communication device is a network device, the second communication device is a terminal device, and reference signals are CSI-RSs. As shown in FIG. 7, before sending the CSI-RSs, the network device performs weighting processing on the CSI-RSs, for example, multiplying the CSI-RSs by a calibration weight. $B_i$ in FIG. 7 represents a calibration weight used by the network device to weight reference signals in a phase i. When estimating a phase of a channel, the network device may perform calculation based on $B_i$. The phase i may be an $i^{th}$ time or an $i^{th}$ time period. The network device may send CSI-RSs to the terminal device for a plurality of times, for example, send the CSI-RSs in a plurality of time periods.

After receiving the reference signals, the second communication device may perform channel measurement by using the reference signals, and feed back channel measurement information to the first communication device.

620: The second communication device sends the channel measurement information to the first communication device.

Correspondingly, the first communication device receives the channel measurement information from the second communication device.

The channel measurement information fed back by the second communication device may also be, for example, referred to as multi-channel information or multi-antenna information, and may include information that can be used to calculate phases of a plurality of channels.

Optionally, the second communication device may feed back quantized information to the first communication device. By feeding back the quantized information, feedback resource overheads can be reduced.

In a possible implementation, the channel measurement information fed back by the second communication device may include, for example, one or more of the following: a PMI, a rank indicator (rank indication, RI), a channel quality indicator (channel quality indicator, CQI), and the like. In other words, the second communication device may feed back one or more of the following to the first communication device: the PMI, the RI, and the CQI. Feeding back one or more of the PMI, the RI, and the CQI complies with a stipulation of a related communications protocol, and reduces feedback resource overheads.

For example, the first communication device is a network device, and the second communication device is a terminal device. As shown in FIG. 7, after receiving the weighted CSI-RSs, the terminal device performs channel state measurement by using the weighted CSI-RSs, and feeds back measurement information. For example, the terminal device may perform channel state measurement based on a weighted CSI-RS received each time, and feed back a PMI. PMI, represents PMI information measured by the terminal device by using a pilot signal received in a corresponding phase i.

630: The first communication device obtains a phase difference between a first channel and a second channel, where the plurality of channels include the first channel and the second channel.

The first communication device may obtain (or estimate, calculate, or determine, or may obtain from another apparatus, or the like) the phase difference between the first channel and the second channel based on the channel measurement information fed back by the second communication device.

It should be understood that "obtaining" (for example, obtaining a phase of a channel, and obtaining a phase compensation value of a channel) is mentioned for a plurality of times in embodiments of this application, and a person skilled in the art should understand a meaning of "obtaining". "Obtaining" may be replaced with "estimating", or may be replaced with "calculating", or may be replaced with "determining", or may be replaced with "inputting/receiving", or the like.

Optionally, before step 630, the method may further include: The first communication device obtains phases of the plurality of channels based on the channel measurement information.

The first communication device may determine the phase difference between the first channel and the second channel based on a phase of the first channel and a phase of the second channel.

The first channel and the second channel may be, for example, referred to as reference channels, and a phase difference between the first channel and the second channel may be, for example, referred to as a reference phase difference. For example, the reference channels are used to determine a phase calibration target, or is used to determine a phase alignment target; and the reference phase difference is used to calibrate a phase based on the reference phase difference, or is used to align a phase difference between other channels with the reference phase difference.

A method for selecting the reference channels (namely, the first channel and the second channel) is not limited in this application. For example, the reference channels may be any two channels, for example, two adjacent channels; or the reference channel may be two channels with a good signal-to-noise ratio (signal noise ratio, SNR), or the like.

It should be understood that the reference channels and the reference phase difference are merely names for brevity, and the names do not limit the protection scope of embodiments of this application.

640: The first communication device obtains, based on the phase difference between the first channel and the second channel, a phase compensation value of a channel other than the first channel and the second channel.

The first communication device obtains, based on the reference phase difference, the phase compensation value of the channel other than the reference channels in the plurality of channels, so that a phase difference between channels meets a specific condition by calibrating the phase of the channel other than the reference channels in the plurality of channels, as shown in FIG. 2.

After obtaining the phase compensation value of the channel other than the reference channels in the plurality of channels, the first communication device may compensate the obtained phase compensation value for the channel when sending data.

Optionally, the first communication device sends data to one or more communication devices through the plurality of channels, where a phase of the channel other than the reference channels in the plurality of channels is a phase that is compensated by using the phase compensation value.

That is, after obtaining the phase compensation value of the channel other than the reference channels in the plurality of channels, when the first communication device needs to transmit data to the communication device, the first communication device may perform, by using the phase compensation value, phase compensation on the data sent through the channel other than the reference channels in the plurality of channels.

The one or more communication devices may include at least the following three cases.

(1) The one or more communication devices include a communication device participating in phase calibration, that is, the one or more communication devices include the second communication device. That is, when the first communication device transmits data to the second communication device, phase compensation may be performed, by using the phase compensation value, on data transmitted through a channel other than the reference channels in the plurality of channels.

(2) The one or more communication devices include a communication device participating in phase calibration and another communication device. To be specific, the one or more communication devices include the second communication device and another communication device. The another communication device may be, for example, a communication device located in a same cell as the second communication device. That is, when the first communication device transmits data to the second communication device and the another communication device, phase compensation may be performed, by using the phase compensation value, on the data transmitted through channels other than the reference channels in the plurality of channels.

(3) The one or more communication devices include a communication device other than the communication device participating in phase calibration. To be specific, the one or more communication devices include a communication device other than the second communication device. The another communication device may be, for example, a communication device located in a same cell as the second communication device. That is, when the first communication device transmits data to a communication device other than the second communication device, phase compensation may be performed, by using the phase compensation value, on data transmitted through a channel other than the reference channels in the plurality of channels.

According to this embodiment of this application, the first communication device sends the reference signals to the second communication device, and the second communication device performs channel measurement by using the reference signals, and feeds back channel measurement information. The first communication device estimates a phase of a channel based on the channel measurement information fed back by the second communication device, and calibrates the phase of the channel. For example, based on the phase difference between the first channel and the second channel, the first communication device obtains the phase compensation value of the channel other than the first channel and the second channel in the plurality of channels, so that the phase difference between the channels meets a preset condition. Through cooperation between the first communication device and the second communication device, that is, by using an air interface calibration technical solution, the phase difference can be calibrated without additional hardware, for example, without depending on a calibration port on an antenna side, a calibration channel on an RRU side, and a radio phase calibration unit (radio phase calibration unit, RPCU), so that hardware costs can be reduced.

The following describes in detail the solutions in embodiments of this application from two aspects.

For understanding, the following mainly uses an example in which the first communication device is a network device and the second communication device is a terminal device for description.

According to aspect 1, a related solution in which the network device calibrates a phase of a channel is provided.

The network device obtains a phase of each of the plurality of channels based on the channel measurement information fed back by the terminal device, and obtains phase compensation values of some or all of the plurality of channels based on the phase of each channel. For example, for a reference channels, a phase compensation value of the reference channel may be understood as zero, or may be understood as that a phase of the reference channel is not compensated. By using the phase compensation value, a phase difference between the plurality of channels can meet a preset condition. During actual communication, phase compensation may be performed on some or all of the plurality of channels, which is not limited herein, provided that the phase difference between the plurality of channels can meet the preset condition through phase compensation.

The preset condition may be, for example, the foregoing: In a same polarization direction, phase differences are equal, and in different polarization directions, phase difference values are equal. In other words, the network device calculates the phase compensation value of the channel based on the channel measurement information fed back by the terminal device, so that the phase difference between the channels meets the condition shown in FIG. 2.

It should be understood that a specific preset condition is not limited in this embodiment of this application. During actual communication, a preset condition may be set based on a requirement or an actual communication status. After the preset condition is set, a phase of a channel may be adjusted in a manner provided in this embodiment of this application, so that the phase difference between the channels meets the preset condition.

It should be further understood that, in this embodiment of this application, a calibration target is mainly described by using that a phase difference between channels meets a preset condition. It should be understood that in actual use, the calibration target may be alternatively a calibration target that a phase of a channel meets a condition, or the calibration target is a calibration target that a phase relationship between channels meets a condition.

For example, a basic principle of this embodiment of this application is described with reference to FIG. 8.

It is assumed that there are three channels, which are respectively referred to as a channel 1, a channel 2, and a channel 3 for differentiation. It is assumed that a phase measured on channel 1 is $\theta$, a phase measured on channel 2 is $(\theta + \Delta)$, and a phase measured on channel 3 is $(\theta + 2\Delta + \delta)$. It is assumed that a preset condition is that phase differences between adjacent channels are the same.

As shown in FIG. 8, a network device sends reference signals to a terminal device through the channel 1, the channel 2, and the channel 3. After receiving the reference signals from the channel 1, the channel 2, and the channel 3, the terminal device performs channel measurement, and feeds back channel measurement information to the network device. The network device may obtain, through the channel measurement information, a phase measured on a channel. For example, the phase of the channel 1 is $(\alpha = \theta)$, the phase of the channel 2 is $(\beta = \theta + \Delta)$, and the phase of the channel 3 is $(\gamma = \theta + 2\Delta + \delta)$. It can be learned that an estimated phase of a channel before compensation does not meet the condition that the phase differences between the adjacent channels are the same. To ensure the target that the phase differences between the adjacent channels are the same, the estimated phase of the channel needs to be compensated by using a compensation technology. It can be learned from FIG. 8 that the phase of the channel after compensation may meet the condition that the phase differences between the adjacent channels are the same.

The network device may select a phase difference between two channels (for example, a phase difference between a first channel and a second channel) as a reference phase difference, so that a phase difference between other adjacent channels is equal to the reference phase difference. In this manner, the phase difference between the two channels may be selected as the reference phase difference, and only a phase of another channel needs to be calibrated. Therefore, calculation is simple and easy to implement.

As shown in FIG. 8, it is assumed that the channel 1 and the channel 2 are used as reference channels, and a phase difference $\Delta$ between the channel 1 and the channel 2 is used as a reference phase difference. In this case, compensation calibration (or calibration) may be performed on the phase of the channel 3, and is changed to $(\mu = \theta + 2\Delta)$ through compensation. In this case, the phase difference between the channel 1 and the channel 2 is $\Delta$, and a phase difference between the channel 2 and the channel 3 is $\Delta$. Before the compensation, the network device estimates that the phase of the channel 3 is $(\gamma = \theta + 2\Delta + \delta)$. To make the phase of the channel 3 after compensation be $(\mu = \theta + 2\Delta)$, a phase compensation value $\delta$ may be calculated.

It can be learned through calculation that $\delta = \gamma - 2\beta + \alpha$. Therefore, the phase compensation value is calculated by using the measured phases of the three channels, for example, a phase compensation value of the channel 3 is calculated, and then phase calibration is performed on signals of the channel 3 by using the phase compensation value, to achieve the target of phase calibration.

It should be understood that the foregoing implementation is merely an example for description, and is not limited herein, provided that phases of some or all of the plurality of channels are calibrated, so that the phase differences between the plurality of channels meet a preset value after the phase calibration. For example, for selection of the reference phase difference, a phase difference between two channels with a good SNR may be selected as the reference phase difference, or a phase difference between any two adjacent channels may be selected as the reference phase difference.

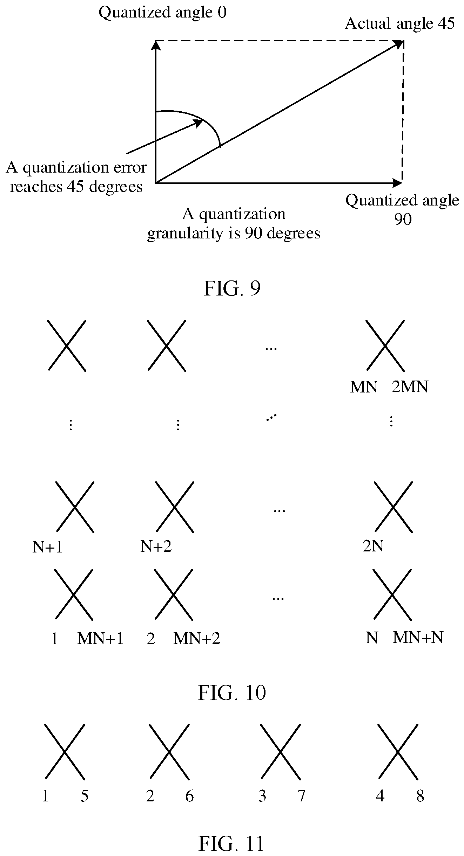

In some cases, for example, when the terminal device feeds back quantized information, an obtained phase may have an error. Consequently, precision of phase estimation is reduced, and precision of phase compensation is also reduced. For example, FIG. 9 is a schematic diagram in which an error occurs in an estimated phase. As shown in FIG. 9, it is assumed that a quantization granularity is 90 degrees, an actual angle is 45 degrees, and a quantized angle is 0 degrees or 90 degrees. In other words, a quantization error may reach 45 degrees. In this example, the terminal device feeds back quantized information, and an obtained phase error is 45 degrees. The network device estimates a phase based on the 45-degree phase error, and performs phase compensation based on the estimated phase. An estimation error may be generated in the process, and an error of a finally obtained phase error value may reach 180 degrees in some cases.

The network device may obtain a phase of each channel in one or more of the following manners, to reduce impact of an error that may be caused by feedback of quantized information by the terminal device, and improve phase estimation precision. The following describes these manners in detail.

Manner 1

The network device may collect channel measurement information fed back by the terminal device for a plurality of times, to obtain a phase of each channel based on the channel measurement information fed back for the plurality of times, thereby improving phase estimation precision. Manner 1 may also be referred to as, for example, a multidimensional projection aggregation algorithm. Details are described below.

The network device sends reference signals to the terminal device for a plurality of times, for example, sends the reference signals in a plurality of phases (or a plurality of times, or a plurality of time periods). For example, the network device sends the reference signals to the terminal device in a plurality of time periods through a plurality of channels, and receives channel measurement information fed back by the terminal device. The channel measurement information includes channel measurement information corresponding to the reference signals sent in the plurality of time periods. After receiving the channel measurement information, the network device may perform operations in the following steps.

(1) The network device may first calculate a correlation matrix between channels.

The network device may calculate a correlation matrix between channels by using calibration weights used for weighting reference signals in a plurality of phases (or a plurality of times, or a plurality of time periods) and channel measurement information fed back by the terminal device.

For example, the network device collects channel measurement information (for example, an RI/PMI/CQI) fed back by the terminal device for a plurality of times, and the network device calculates a correlation matrix R between channels based on the collected channel measurement information. For example, the correlation matrix R between channels meets Formula 1.

$$R = \sum\nolimits_{i=0}^{K-1} B_i W_{PMI,i} C_i \left( B_i W_{PMI,i} \right)^H$$

<div align="right">Formula 1</div>

Herein, $B_i$ represents a calibration weight used by the network device to weight the reference signals in a phase $i$ (or an $i^{th}$ time or an $i^{th}$ time period). K represents a quantity of times that the network device sends the reference signals. $W_{PMI,i}$ represents a calibration weight corresponding to PMI information measured by the terminal device by using reference signals received at a corresponding phase $i$ (or an $i^{th}$ time or an $i^{th}$ time period). $C_i$ represents a signal to interference plus noise ratio (signal to interference plus noise ratio, SINR) value corresponding to CQI information measured by the terminal device by using reference signals received at a corresponding phase $i$ (or an $i^{th}$ time or an $i^{th}$ time period). The superscript H represents conjugate transposition. For example, $A^H$ represents conjugate transposition of a matrix (or vector) A.

(2) The network device calculates an eigenvector of R by using the correlation matrix R between channels.

In a possible implementation, singular value decomposition (singular value decomposition, SVD) is performed on the correlation matrix R between channels to obtain an eigenvector.

It should be understood that the correlation matrix shown above is mainly obtained based on feedback of a transport layer (that is, a transmission rank (rank) is 1). When a quantity of transmission layers increases, if there are a plurality of transmission layers, the terminal device may separately feed back based on each transmission layer, and the network device may obtain a plurality of correlation matrices corresponding to the plurality of transmission layers. The network device may perform independent processing on each transmission layer, or may perform combined processing. For example, during combination processing, the network device may perform accumulation processing on a correlation matrix corresponding to a transmission layer, to obtain the correlation matrices of the plurality of transmission layers. For example, if the quantity of transmission layers is 4, the network device may obtain four correlation matrices that respectively correspond to the four transmission layers. In this case, the network device may perform accumulation processing on correlation matrices corresponding to the four transmission layers, to obtain the correlation matrices of the four transmission layers, and perform SVD on the correlation matrices of the four transmission layers, to obtain eigenvectors of the correlation matrices of the four transmission layers.

For example, a channel phase vector obtained by the network device based on the eigenvector of R is W, and each element in W represents a phase value of each channel. W may satisfy, for example, $W = [\varphi_0, \varphi_1, \cdots \varphi_{L-2}, \varphi_{L-1}]^T$. The upper corner mark T represents rotation. For example, $A^T$ represents rotation of the matrix (or a vector) $A$, $\varphi_0$ to $\varphi_{L-1}$ represent phase values of channels that are obtained by the network device based on the eigenvector of R, L may represent a quantity of channels, and L is a positive integer.

(3) The network device calculates a phase compensation value of each channel based on the obtained channel phase vector W.

After calculating the phase compensation value, the network device may compensate, when sending data, a channel for the phase compensation value obtained through calculation.

For example, W may be split into two parts, which respectively correspond to antennas in two polarization directions.

For example, FIG. 10 is a schematic diagram of an antenna array. The antenna array shown in FIG. 10 is an antenna array with M rows and N columns, that is, may be referred to as an M×N antenna array for short. In other words, a dimension of the antenna array is M×N. That is, the antenna array may include M×N antenna units. As shown in FIG. 10, "×" in FIG. 10 is used to represent a cross-polarized antenna unit. The cross-polarized antenna unit may correspond to two polarization directions. "/" represents a first polarization direction (or may be referred to as a positive polarization direction), and "\" represents a second polarization direction (or may be referred to as a negative polarization direction). Based on the antenna array shown in FIG. 10 and the channel measurement information fed back by the terminal device, a phase of a channel in a polarization plane (for example, a channel in the first polarization direction or a polarization plane formed by antennas) obtained by the network device may meet Formula 2.

$$\Phi^+ = \begin{bmatrix} \varphi_{M,1} & \varphi_{M,2} & \cdots & \varphi_{M,N} \\ \vdots & \vdots & \ddots & \vdots \\ \varphi_{2,1} & \varphi_{2,2} & \cdots & \varphi_{2,N} \\ \varphi_{1,1} & \varphi_{1,2} & \cdots & \varphi_{1,N} \end{bmatrix}$$

Formula 2

Herein, L = M × N, $\varphi_{m,n}$ represents a phase value of a channel in an $m^{th}$ row and an $n^{th}$ column in the current polarization plane, M, N, m, and n are positive integers, $m \in [1, M]$, and $n \in [1, N]$. As an example rather than a limitation, L elements (that is, $\varphi_0$ to $\varphi_{L-1}$) in W obtained in (2) may be first arranged from 0 to L - 1 to fill the first row and N columns, and then arranged in the second row and N columns, and so on, to fill the entire phase matrix. For example, if M = 1, and N = 4, $\Phi^+ = [\varphi_{1,1} \ \varphi_{1,2} \ \varphi_{1,3} \ \varphi_{1,4}]$.

A phase compensation value $\Theta^+$ of the current polarization plane may meet Formula 3.

$$\Theta^+ = \begin{bmatrix} \theta_{M,1} & \theta_{M,2} & \cdots & \theta_{M,N} \\ \vdots & \vdots & \ddots & \vdots \\ \theta_{2,1} & \theta_{2,2} & \cdots & \theta_{2,N} \\ \theta_{1,1} & \theta_{1,2} & \cdots & \theta_{1,N} \end{bmatrix}$$

Formula 3

Herein, $\theta_{m,n}$ represents a phase compensation value of the channel in the $m^{th}$ row and the $n^{th}$ column in the current polarization plane. It may be understood that, for the channel in the $m^{th}$ row and the $n^{th}$ column, $\varphi_{m,n}$ represents the phase value of the channel, and $\theta_{m,n}$ represents the phase compensation value of the channel. Details are not described in the following.

For a horizontal phase difference, a difference between two phases may be selected as a reference phase difference, and another horizontal phase difference is aligned with the reference phase difference. For differentiation, the horizontal phase difference is referred to as a horizontal reference phase difference. The horizontal reference phase difference may satisfy, for example, Formula 4.

$$\Delta_H = \frac{1}{y-f}\left(\varphi_{x,y} - \varphi_{e,f}\right)$$

Formula 4

Herein, $\Delta_H$ represents a horizontal reference phase difference corresponding to each channel in the current polarization plane, $\varphi_{x,y}$ represents a phase value of a channel in an $x^{th}$ row and a $y^{th}$ column in the current polarization plane, $\varphi_{e,f}$ represents a phase value of a channel in an $e^{th}$ row and an $f^{th}$ column in the current polarization plane, and x, y, e, and f are positive integers.

For a vertical phase difference, a difference between two phases may be selected as a reference phase difference, and another vertical phase difference is aligned with the reference phase difference. For differentiation, the vertical phase difference is referred to as a vertical reference phase difference. The vertical reference phase difference may satisfy, for example, Formula 5.

$$\Delta_V = \frac{1}{g-e}\left(\varphi_{g,h} - \varphi_{e,f}\right)$$

Formula 5

Herein, $\Delta_V$ represents a vertical reference phase difference corresponding to each channel in the current polarization plane, $\varphi_{g,h}$ represents a phase value of a channel in a $g^{th}$ row and an $h^{th}$ column in the current polarization plane, $\varphi_{e,f}$ represents a phase value of a channel in an $e^{th}$ row and an $f^{th}$ column in the current polarization plane, and g and h are positive integers.

Therefore, based on Formula 4 and Formula 5, a phase compensation value may meet Formula 6.

$$\theta_{m,n} = \left(n-f\right)\Delta_H + \left(m-e\right)\Delta_V + \varphi_{e,f} - \varphi_{m,n}$$

Formula 6

Herein, $\theta_{m,n}$ represents the phase compensation value of the channel in the $m^{th}$ row and the $n^{th}$ column in the current polarization plane.

Similarly, based on the channel measurement information fed back by the terminal device, a phase of a channel in the other polarization plane (for example, a channel in the second polarization direction or a polarization plane formed by antennas) obtained by the network device may meet Formula 7.

$$\Phi^- = \begin{bmatrix} \varphi'_{M,1} & \varphi'_{M,2} & \cdots & \varphi'_{M,N} \\ \vdots & \vdots & \ddots & \vdots \\ \varphi'_{2,1} & \varphi'_{2,2} & \cdots & \varphi'_{2,N} \\ \varphi'_{1,1} & \varphi'_{1,2} & \cdots & \varphi'_{1,N} \end{bmatrix}$$

Formula 7

Herein, $\varphi'_{m,n}$ represents a phase value of the channel in the $m^{th}$ row and the $n^{th}$ column in the current polarization plane.

A phase compensation value $\Theta^-$ in the other polarization plane may meet Formula 8.

$$\Theta^{-} = \begin{bmatrix} \theta'_{M,1} & \theta'_{M,2} & \cdots & \theta'_{M,N} \\ \vdots & \vdots & \ddots & \vdots \\ \theta'_{2,1} & \theta'_{2,2} & \cdots & \theta'_{2,N} \\ \theta'_{1,1} & \theta'_{1,2} & \cdots & \theta'_{1,N} \end{bmatrix}$$

Formula 8

Herein, $\theta_{m,n}$ represents a phase value of the channel in the $m^{th}$ row and the $n^{th}$ column in the current polarization plane.

It may be understood that, in this embodiment of this application, for differentiation, for a channel in an $m^{th}$ row and an $n^{th}$ column in a polarization plane, $\varphi_{m,n}$ represents a phase value of the channel, and $\theta_{m,n}$ represents a phase compensation value of the channel; and for a channel in an $m^{th}$ row and an $n^{th}$ column in the other polarization plane, $\varphi'_{m,n}$ represents a phase value of the channel, and $\theta'_{m,n}$ represents a phase compensation value of the channel.

The phase compensation value may meet Formula 9.

$$\theta'_{m,n} = (n-p)\Delta'_H + (m-q)\Delta'_V + \varphi'_{p,q} - \varphi'_{m,n}$$

Formula 9

Herein, $\Delta'_H$ represents a horizontal reference phase difference corresponding to each channel in the current polarization plane, and $\Delta'_H = \dfrac{1}{y-p}\left(\varphi'_{x,y} - \varphi'_{q,p}\right)$; and $\Delta'_V$ represents a vertical reference phase difference corresponding to each channel in the current polarization plane, $\Delta'_V = \dfrac{1}{g-q}\left(\varphi'_{g,h} - \varphi'_{q,p}\right)$, and x, y, p, q, g, and h are positive integers. $\theta_{m,n}$ represents the phase compensation value of the channel in an $m^{th}$ row and an $n^{th}$ column in the current polarization plane. $\varphi'_{p,q}$ represents a phase value of a channel in a $p^{th}$ row and a $q^{th}$ column in the current polarization plane, and $\varphi'_{m,n}$ represents the phase value of the channel in the $m^{th}$ row and the $n^{th}$ column in the current polarization plane. It may be understood that $\Delta_H$ and $\Delta'_H$ and are descriptions for distinguishing between different polarization planes, and $\Delta_H$ and $\Delta'_H$ separately represent horizontal reference phase differences corresponding to channels in different polarization planes; and $\Delta_V$ are $\Delta'_V$ descriptions for distinguishing between different polarization planes, and $\Delta_V$ and $\Delta'_V$ separately represent vertical reference phase differences corresponding to channels in different polarization planes. Details are not described in the following.

In the foregoing manner, a phase compensation value of each channel in each polarization plane may be calculated.

For brevity of description, a polarization plane formed by channels or antennas in the first polarization direction is referred to as a first polarization plane, and a polarization plane formed by channels or antennas in the second polarization direction is referred to as a second polarization plane. It is assumed that a horizontal reference phase difference corresponding to each channel in the first polarization plane is $(\varphi_{1,2}-\varphi_{1,1})$, that is, $\Delta_H=\varphi_{1,2}-\varphi_{1,1}$, and a vertical reference phase difference is $(\varphi_{2,1}-\varphi_{1,1})$, that is, $\Delta_V=\varphi_{2,1}-\varphi_{1,1}$; and a horizontal reference phase difference corresponding to each channel in the second polarization plane is $(\varphi'_{1,2}-\varphi'_{1,1})$, that is, $\Delta'_H=\varphi'_{1,2}-\varphi'_{1,1}$, and a vertical reference phase difference is $(\varphi'_{2,1}-\varphi'_{1,1})$, that is, $\Delta'_V=\varphi'_{2,1}-\varphi'_{1,1}$. The phase compensation values that are in the two polarization planes and that are obtained by the network device are respectively:

$$\theta_{m,n} = (n-1)\Delta_H + (m-1)\Delta_V + \varphi_{1,1} - \varphi_{m,n} \quad ;$$

and

$$\theta'_{m,n} = (n-1)\Delta'_H + (m-1)\Delta'_V + \varphi'_{1,1} - \varphi'_{m,n}.$$

In a specific example, it is assumed that M = 1 and N = 4, and an arrangement of the antenna array is shown in FIG. 11. In the 8T (namely, eight channels) scenario shown in FIG. 11, the foregoing formulas may be represented as follows:

(1) Based on the channel measurement information fed back by the terminal device, that the network device obtains a phase value of each channel in the first polarization plane is as follows:

$\Phi^+=[\varphi_{1,1}\ \varphi_{1,2}\ \varphi_{1,3}\ \varphi_{1,4}]$, where $\varphi_{1,1}$ represents a phase value of a channel in the first row and the first column in the first polarization plane, $\varphi_{1,2}$ represents a phase value of a channel in the first row and the second column in the first polarization plane, $\varphi_{1,3}$ represents a phase value of a channel in the first row and the third column in the first polarization plane, and $\varphi_{1,4}$ represents a phase value of a channel in the first row and the fourth column in the first polarization plane.

(2) Based on the channel measurement information fed back by the terminal device, that the network device obtains a phase compensation value of each channel in the first polarization plane is as follows:

$\Theta^+=[\theta_{1,1}\ \theta_{1,2}\ \theta_{1,3}\ \theta_{1,4}]$, where $\theta_{1,1}$ represents a phase compensation value of a channel in the first row and the first column in the first polarization plane, $\theta_{1,2}$ represents a phase compensation value of a channel in the first row and the second column in the first polarization plane, $\theta_{1,3}$ represents a phase compensation value of a channel in the first row and the third column in the first polarization plane, and $\theta_{1,4}$ represents a phase compensation value of a channel in the first row and the fourth column in the first polarization plane.

(3) A horizontal reference phase difference corresponding to each channel in the first polarization plane is as follows: $\Delta_H=\varphi_{1,2}-\varphi_{1,1}$.

(4) A vertical reference phase difference corresponding to each channel in the first polarization plane is as follows: $\Delta_V = 0$.

(5) A phase compensation value of each channel in the first polarization plane may meet the following formula:

$$\theta_{m,n}=(n-1)\Delta_H+(m-1)\Delta_V+\varphi_{1,1}-\varphi_{m,n}.$$

Specifically, the phase compensation value of each channel in the first polarization plane is:

$$\theta_{1,1}=0 \qquad\qquad ; \qquad\qquad \theta_{1,2}=\varphi_{1,2}-\varphi_{1,1}+\varphi_{1,1}-\varphi_{1,2}=0 \qquad\qquad ;$$

$$\theta_{1,3}=(2\varphi_{1,2}-2\varphi_{1,1})+(\varphi_{1,1}-\varphi_{1,3})=2\varphi_{1,2}-\varphi_{1,1}-\varphi_{1,3} \qquad\qquad ;$$

and

$$\theta_{1,4}=(3\varphi_{1,2}-3\varphi_{1,1})+(\varphi_{1,1}-\varphi_{1,4})=3\varphi_{1,2}-2\varphi_{1,1}-\varphi_{1,4}.$$

(6) Based on the channel measurement information fed back by the terminal device, that the network device obtains a phase value of each channel in the second polarization plane is as follows:

$\Phi^-=[\varphi'_{1,1}\ \varphi'_{1,2}\ \varphi'_{1,3}\ \varphi'_{1,4}]$, where $\varphi'_{1,1}$ represents a phase value of a channel in the first row and the first column in the second polarization plane, $\varphi'_{1,2}$ represents a phase value of a channel in the first row and the second column in the second polarization plane, $\varphi'_{1,3}$ represents a phase value of a channel in the first row and the third column in the second polarization plane, and $\varphi'_{1,4}$ represents a phase value of a channel in the first row and the fourth column in the second polarization plane.

(7) Based on the channel measurement information fed back by the terminal device, that the network device obtains a phase compensation value of each channel in the second polarization plane is as follows:

$\Theta^-=[\theta_{1,1}\ \theta_{1,2}\ \theta_{1,3}\ \theta_{1,4}]$, where $\theta_{1,1}$ represents a phase compensation value of a channel in the first row and the first column in the second polarization plane, $\theta'_{1,2}$ represents a phase compensation value of a channel in the first row and the second column in the second polarization plane, $\theta_{1,3}$ represents a phase compensation value of a channel in the first row and the third column in the second polarization plane, and $\theta_{1,4}$ represents a phase compensation value of a channel in the first row and the fourth column in the second polarization plane.

(8) The horizontal reference phase difference corresponding to each channel in the second polarization plane is as follows: $\Delta'_H=\varphi'_{1,2}-\varphi'_{1,1}$, the vertical reference phase difference corresponding to each channel in the second polarization plane is as follows: $\Delta'_V = 0$, and a phase compensation value corresponding to each channel in the second polarization plane may satisfy the following formula:

$\theta_{m,n}=(n\text{-}1)\Delta'_H+(m\text{-}1)\Delta'_V+\varphi'_{1,1}\text{-}\varphi'_{m,n}$, where specifically, the phase compensation value of each channel in the second polarization plane is:

$$\theta'_{1,1}=0 \; ; \quad \theta'_{1,2}=\left(\varphi_{1,2}-\varphi_{1,1}\right)+\left(\varphi'_{1,1}-\varphi'_{1,2}\right) \; ; \quad \theta'_{1,3}=\left(2\varphi_{1,2}-2\varphi_{1,1}\right)+\left(\varphi'_{1,1}-\varphi'_{1,3}\right) \; ;$$

and

$$\theta'_{1,4}=\left(3\varphi_{1,2}-3\varphi_{1,1}\right)+\left(\varphi'_{1,1}-\varphi'_{1,4}\right).$$

Optionally, during actual implementation, for ease of implementation, calculation may be performed by using an element in the eigenvector of the correlation matrix R. Implementation is simple, and calculation complexity can be reduced.

It is assumed that the eigenvector of the correlation matrix R obtained by the network device through calculation is:

$$V=\left[\alpha_0^+,\alpha_1^+,\alpha_2^+,\alpha_3^+,\alpha_0^-,\alpha_1^-,\alpha_2^-,\alpha_3^-\right].$$

Then, $\quad \Delta_{01}^+=\left(\alpha_1^+\right)^*\cdot\alpha_0^+ \quad , \quad \Delta_{02}^+=\left(\alpha_2^+\right)^*\cdot\alpha_0^+ \quad , \quad \Delta_{03}^+=\left(\alpha_3^+\right)^*\cdot\alpha_0^+ \quad , \quad \Delta_{01}^-=\left(\alpha_1^-\right)^*\cdot\alpha_0^-$ ,

$\Delta_{02}^-=\left(\alpha_2^-\right)^*\cdot\alpha_0^-$, and $\Delta_{03}^-=\left(\alpha_3^-\right)^*\cdot\alpha_0^-$. Herein, * represents conjugation. $\alpha_0^+$ is a complex number value (for example, including an amplitude and a phase) of the first channel in the first polarization direction in the eigenvector, $\alpha_1^+$ is a complex number value of the second channel in the first polarization direction in the eigenvector, $\alpha_2^+$ is a complex number value of the third channel in the first polarization direction in the eigenvector, and $\alpha_3^+$ is a complex number value of the fourth channel in the first polarization direction in the eigenvector. Similarly, $\alpha_0^-$ is a complex number value of the first channel in the second polarization direction in the eigenvector, $\alpha_1^-$ is a complex number value of the second channel in the second polarization direction in the eigenvector, $\alpha_2^-$ is a complex number value of the third channel in the second polarization direction in the eigenvector, and $\alpha_3^-$ is a complex number value of the fourth channel in the second polarization direction in the eigenvector. $\Delta_{01}^+$ is used as an example, $\Delta_{01}^+$ is a value obtained after conjugate multiplication of a complex number value of the first channel and a complex number value of the second channel, and is used to calculate a phase difference.

The example shown in FIG. 11 is used as an example, the phase compensation value of each channel in the first polarization plane (namely, the phase compensation value of each channel in (5)) may be represented as:

$$\theta_{1,1}=0 \qquad ; \qquad \theta_{1,2}=0 \qquad ; \qquad \theta_{1,3}=2*angle\left(\Delta_{01}^+\right)+angle\left(\Delta_{02}^+\right) \qquad ;$$

and

$$\theta_{1,4}=3*angle\left(\Delta_{01}^+\right)+angle\left(\Delta_{03}^+\right).$$

The phase compensation value of each channel in the second polarization plane (namely, the phase compensation value of each channel in (8)) may be expressed as:

$$\theta'_{1,1}=0 \; ; \quad \theta'_{1,2}=angle\left(\Delta_{01}^+\right)+angle\left(\Delta_{02}^-\right) \; ; \quad \theta'_{1,3}=2*angle\left(\Delta_{01}^+\right)+angle\left(\Delta_{02}^-\right) \; ;$$

and

$$\theta'_{1,4} = 3 * angle\left(\Delta^+_{01}\right) + angle\left(\Delta^-_{03}\right).$$

The function *angle*() represents calculating an angle of a complex number. It is assumed that Z is a complex number, **Z** = A + Bi (both A and B are real numbers), A is a real part, B is an imaginary part, *angle*(Z) of Z = arctan(B/A), and arctan() indicates an arc tangent function.

It should be understood that an example in which an angle of a complex number is obtained by using a function *angle*() is used herein for description. This is not limited herein. Any manner in which the angle of a complex number can be calculated is applicable to this embodiment of this application.

Based on the foregoing manner 1, the network device sends reference signals obtained after a plurality of times of weighting to the terminal device. The terminal device performs channel state measurement by using the reference signals and feeds back channel measurement information. The network device calculates a correlation matrix by using the channel measurement information, calculates a phase and a phase compensation value of each channel by using correlation matrix information, and then may perform phase compensation for data sent through each channel by using the phase compensation value. In addition, when the channel phase and the phase compensation value are calculated, eigenvalue decomposition or eigenvector decomposition of the correlation matrix may be performed to obtain an eigenvector of the correlation matrix, and the channel phase and the phase compensation value are calculated by using an element corresponding to each channel in the eigenvector. Calculation is simple.

Manner 2

The network device may send reference signals to a plurality of terminal devices, and collect channel measurement information fed back by the plurality of terminal devices, to calculate a phase of each channel based on feedback of the plurality of terminal devices, thereby improving phase estimation precision. Manner 2 may also be referred to as, for example, a multi-user multidimensional averaging algorithm. Details are described below.

In a possible implementation, phase compensation values are separately estimated based on the channel measurement information fed back by different terminal devices, and an average value is obtained for the phase compensation values estimated by the different terminal devices, for example, Formulas 10 and 11 are met.

$$\theta_{m,n,avg} = \frac{1}{K}\sum_{i=0}^{K-1}\theta_{m,n}$$

Formula 10

$$\theta'_{m,n,avg} = \frac{1}{K}\sum_{i=0}^{K-1}\theta'_{m,n}$$

Formula 11

K represents a quantity of terminal devices participating in averaging, $\theta_{m,n,avg}$ and $\theta'_{m,n,avg}$ respectively represent phase compensation values of channels in two finally determined polarization planes (for example, a first polarization plane formed by channels or antennas in a first polarization direction, and a second polarization plane formed by channels or antennas in a second polarization direction), that is, $\theta_{m,n,avg}$ represents a phase compensation value of a channel in an $m^{th}$ row and an $n^{th}$ column in the first polarization plane, and $\theta'_{m,n,avg}$ represents a phase compensation value of a channel in an $m^{th}$ row and an $n^{th}$ column in the second polarization plane. For $\theta_{m,n}$ and $\theta'_{m,n}$, refer to descriptions of the foregoing formulas or parameters. Details are not described herein again.

It should be understood that the foregoing uses an example in which the average value is obtained for the phase compensation values estimated by the different terminal devices for description. This is not limited herein.

In another possible implementation, when a phase and a phase compensation value of each channel are calculated, calculation may be performed based on the channel measurement information fed back by the plurality of terminal devices. For example, when calculating the phase and the phase compensation value of each channel in manner 1, the network device may calculate the correlation matrix R between channels by using the channel measurement information fed back by the plurality of terminal devices and a calibration weight used for weighting reference signals. In other words, in this implementation, the channel measurement information fed back by the plurality of terminal devices may be used as an input used to calculate the correlation matrix R in manner 1.

It should be understood that the foregoing two implementations are merely examples for description, and a manner of determining a phase compensation value of each channel based on feedback of the plurality of terminal devices is applicable to this embodiment of this application. For example, channel measurement information fed back by some terminal devices may be selected based on an actual situation for calculation.

It should be further understood that manner 1 and manner 2 may be used in combination.

For example, the phase and the phase compensation value that are determined based on feedback of each terminal device are calculated in manner 1 based on channel measurement information fed back by each terminal device, and then a final phase compensation value of each channel is calculated in manner 2.

Based on manner 2, the network device may calculate the phase compensation value of each channel based on assistance of the plurality of terminal devices, to implement phase calibration. For example, different terminal devices estimate different phase compensation values, and phase estimation precision can be further improved by averaging phase differences between terminal devices.

Manner 3

Channels in two polarization directions may be divided into two groups, and each group is trained separately. In this embodiment of this application, training means that a reference signal is sent through a channel to measure a phase of the channel.

If weighted training is performed on all channels in a unified manner, a training time may be long, and there is a small quantity of terminal devices that support a large quantity of channels. Consequently, samples that can be used for training are reduced, and phase calculation precision is reduced. Therefore, channels in two polarization directions may be divided into two groups, and each group is separately trained. Manner 3 may also be, for example, referred to as a channel grouping algorithm. Details are described below.

In a possible implementation, a reference signal is sent through a channel in a first polarization direction in a first time period, and a reference signal is through a channel in a second polarization direction in a second time period.

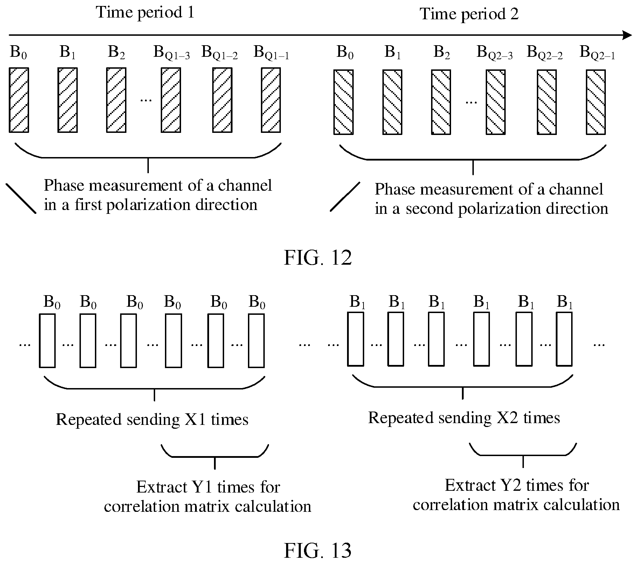

For example, FIG. 12 is a schematic diagram in which channels are grouped and trained independently. As shown in FIG. 12, two polarized channels are divided into two groups, and respectively correspond to a time period 1 and a time period 2. Reference signals are sent for a plurality of times in the time period 1, and a phase of a channel in a first polarization direction is obtained based on fed-back channel measurement information; and reference signals are sent for a plurality of times in the time period 2, and a phase of a channel in a second polarization direction is obtained based on fed-back channel measurement information. Based on this manner, two correlation matrices R (for example, referred to as R1 and R2) may be obtained, and respectively correspond to the channel in the first polarization direction and the channel in the second polarization direction. For example, R1 and R2 meet Formulas 12 and 13 respectively.

$$R1 = \sum_{i=0}^{Q1-1} B_i W_{PMI,i} C_i \left( B_i W_{PMI,i} \right)^H$$

Formula 12

$$R2 = \sum_{j=0}^{Q2-1} B_j W_{PMI,j} C_j \left( B_j W_{PMI,j} \right)^H$$

Formula 13

Q1 represents a quantity of times of sending the reference signals in the time period 1, and Q2 represents a quantity of times of sending the reference signals in the time period 2. For other parameters in Formulas 12 and 13, refer to descriptions of the foregoing formulas or parameters. Details are not described herein again. It should be understood that Q1 and Q2 may be the same or may be different. This is not limited herein.

Compared with the correlation matrix R in manner 1, dimensions of the correlation matrices (for example, R1 and R2) in manner 3 are halved. In manner 3, SVD decomposition is independently performed on the correlation matrices (for example, R1 and R2) to calculate a corresponding eigenvector, and all elements in one eigenvector correspond to a channel in one polarization direction. For details, refer to the description in manner 1. Details are not described herein again.

It should be understood that the foregoing is merely an example for description, and this is not limited. For example, the phase and the phase compensation value of each channel may alternatively be calculated without time segment division. For example, in the time period 1, the reference signals are sent for the plurality of times through the channel in the first polarization direction, and in the time period 2, the reference signals are sent for the plurality of times through the channel in the second polarization direction, and then a phase of a channel in each polarization direction is calculated based on channel measurement feedback information received in each time period. For another example, in the time period 1, the reference signals are sent for the plurality of times through the channel in the first polarization direction, and feedback measurement information is received; in the time period 2, the reference signals are sent for the plurality of times through the channel in the second polarization direction, and feedback measurement information is received; and then a phase of a channel in each polarization direction is calculated based on channel measurement feedback information received in each time period.

It should be further understood that manner 3 may be used in combination with manner 1, or may be used in combination with manner 2. For example, manner 1 and/or manner 2 may be used to calculate a phase and a phase compensation value of a channel in each polarization direction.

Based on manner 3, channels in two polarization directions are divided into two groups, and each group is separately trained (that is, phase calibration is performed on each group), so that training can be performed in different time periods. This can effectively reduce a channel dimension, reduce a training time, and can increase a quantity of terminal devices that can be used for training.

Manner 4

For weighted reference signals, the network device may continuously send, for a plurality of times, reference signals that are weighted based on a same calibration weight, and select one or more feedback results to perform phase calibration.

During implementation of the terminal device, a measurement quantity may be filtered. In this case, a measurement result at a moment may be related to measurement results at previous moments. This is inconsistent with a requirement that a to-be-obtained measurement result at a moment is related only to a result of a current weighted reference signal, and a restored correlation matrix may be biased. Therefore, weighted reference signals may be continuously sent for a plurality of times by using one calibration weight (or may be understood as that the network device repeatedly sends the reference signals for the plurality of times by using a same beam), and then reference signals weighted by using a next calibration weight are sent. The network device selects, as a valid measurement quantity, a measurement quantity that is fed back by the terminal device and that corresponds to a part of sending moment sampling points of a calibration weight, to calculate a correlation matrix. Manner 4 may also be, for example, referred to as a solution of repeated beam sending in combination with effective sampling point selection. Details are described below.

In a possible implementation, the network device weights reference signals by using a calibration weight, continuously sends, X times, reference signals obtained after weighting based on the calibration weight, and selects a feedback result corresponding to Y times of X times as an input used to calculate the correlation matrix R in manner 1. Alternatively, it may be understood that the network device sends reference signals X times by using a same beam, and selects a feedback result corresponding to Y times in the X times as an input used to calculate the correlation matrix R in manner 1. X is an integer greater than 1, Y is an integer greater than 1 or equal to 1, and X is greater than Y X and Y may be preconfigured, or may be specified in a protocol, or may be agreed upon by the network device and the terminal device. This is not limited herein. In an example, Y times may be the last time, or the last plurality of times.

For example, FIG. 13 is a schematic diagram of repeated sending and selecting for correlation matrix calculation. As shown in FIG. 13, weighted reference signals may be continuously sent for a plurality of times by using one calibration weight, and then reference signals weighted by using a next calibration weight are sent. As shown in FIG. 13, reference signals are weighted by using a calibration weight $B_0$, and the reference signals weighted by using the calibration weight $B_0$ are sent for X1 consecutive times, then reference signals are weighted by using a calibration weight $B_1$, and the reference signals weighted by using the calibration weight $B_1$ is sent for X2 consecutive times. X1 and X2 may be the same (for example, may be a same preconfigured value), or may be different. This is not limited herein. The network device may select, as a valid measurement quantity, a measurement quantity that is fed back by the terminal device and that corresponds to a part of sending moment sampling points of a calibration weight, to calculate a correlation matrix. As shown in FIG. 13, the network device continuously sends, for the X1 times, the reference signals obtained by weighting by using the calibration weight $B_0$. Correspondingly, the network device may obtain channel measurement information of the reference signals obtained by weighting by using the calibration weight $B_0$ for the X1 times. For example, the network device may select channel measurement information of Y1 times in the X1 times as effective channel measurement information to calculate a correlation matrix. Similarly, the network device sends, for the X2 consecutive times, the reference signals obtained by weighting by using the calibration weight $B_1$. Correspondingly, the network device may obtain channel measurement information of the reference signals obtained by weighting by using the calibration weight $B_1$ for the X2 times. For example, the network device may select channel measurement information of Y2 times in the X2 times as effective channel measurement information to calculate a correlation matrix. Y1 and Y2 may be the same (for example, may be a same preconfigured value), or may be different. This is not limited herein.

It should be understood that FIG. 13 is merely an example, and is not limited herein. For example, the foregoing processing may be performed on a calibration weight. For another example, the Y times may be one or more of the X times.

It should be understood that manner 4 may be used in combination with manner 1, or may be used in combination with manner 2, or may be used in combination with manner 3.

Based on manner 4, weighted reference signals may be continuously sent for a plurality of times by using one calibration weight, and then reference signals weighted by using a next calibration weight are sent. The network device selects, as a valid measurement quantity, a measurement quantity that is fed back by the terminal device and that corresponds to a part of sending moment sampling points of a calibration weight, to calculate a correlation matrix. For example, the network device selects, as a valid measurement quantity, a measurement quantity that is fed back by the terminal device and that corresponds to the last one or more times of repeatedly sending times of a calibration weight, to calculate a correlation matrix. In manner 4, a problem of joint filtering of measurement quantities at a plurality of moments by the terminal device can be effectively resolved.

With reference to manner 1 to manner 4, the foregoing lists manners that may be used by the network device in a phase estimation process. In the foregoing manner, phase estimation precision can be improved. Manner 1 to manner 4 may be used separately or in combination. When manner 1 to manner 4 are used in combination, phase estimation precision may be further improved.

The foregoing describes specific processing of the network device with reference to aspect 1. The following describes feedback of the terminal device.

According to aspect 2, a feedback mode of the terminal device is provided.

The feedback mode of the terminal device may include the following two types: a wideband feedback mode and a subband feedback mode. In this embodiment of this application, the terminal device may perform feedback by using any one of the following methods.

(1) A mode in which the terminal device feeds back channel measurement information may be a wideband feedback mode. The wideband feedback mode indicates that the terminal device may select a wideband measurement quantity (for example, one or more of the following: an RI, a PMI, and a CQI) for feedback. The wideband measurement quantity indicates wideband measurement-based channel measurement information. For example, the wideband measurement-based channel measurement information includes a quantized value of a wideband amplitude coefficient.

(2) A mode in which the terminal device feeds back channel measurement information may be a subband feedback mode. The subband feedback mode indicates that the terminal device may select a subband measurement quantity (for example, one or more of the following: an RI, a PMI, and a CQI) for feedback. The subband measurement quantity represents subband measurement-based channel measurement information. For example, the subband measurement-based channel measurement information includes a quantized value of a combination coefficient of a subband, and the combination coefficient includes, for example, a subband amplitude coefficient and a subband phase coefficient.

(3) Modes in which the terminal device feeds back channel measurement information may be a wideband feedback mode and a subband feedback mode.

The terminal device may perform feedback by using any one of the foregoing methods. The following mainly describes cases of the subband feedback mode, namely, the foregoing method (2) and method (3). The foregoing method (2) is used as an example. In this method, all the foregoing calculation processes of the correlation matrix R, phase calculation processes, and compensation processes are subband-based calculation. The network device may perform weighting on a reference signal through broadband weighting or subband weighting. If subband weighting is used, different calibration weights may be added to different subbands.

During actual communication, there is a phase difference and a delay difference between channels, and a phase error caused by the inter-channel delay difference may not be effectively compensated by performing only phase calibration. A subband measurement-based phase calculation and compensation solution is used, that is, the terminal device performs feedback by using the foregoing method (2) and method (3), so that a phase error caused by an inter-channel delay difference can be effectively resolved.

In a possible implementation, the network device may indicate, to the terminal device, that a mode for feeding back channel measurement information includes a subband feedback mode, or the network device may indicate the terminal device to perform subband feedback based on a reference signal. The terminal device performs subband feedback based on instructions of the network device. The network device calculates a correlation matrix of a subband by using a measurement quantity of subband feedback by the terminal device, then calculates a phase and a phase compensation value of a channel of the subband, and compensates the phase compensation value obtained through calculation based on subband compensation when sending data. It should be understood that, that the terminal device performs feedback based on a subband may be indicated by the network device, or may be predefined (for example, pre-agreed upon). This is not limited herein.

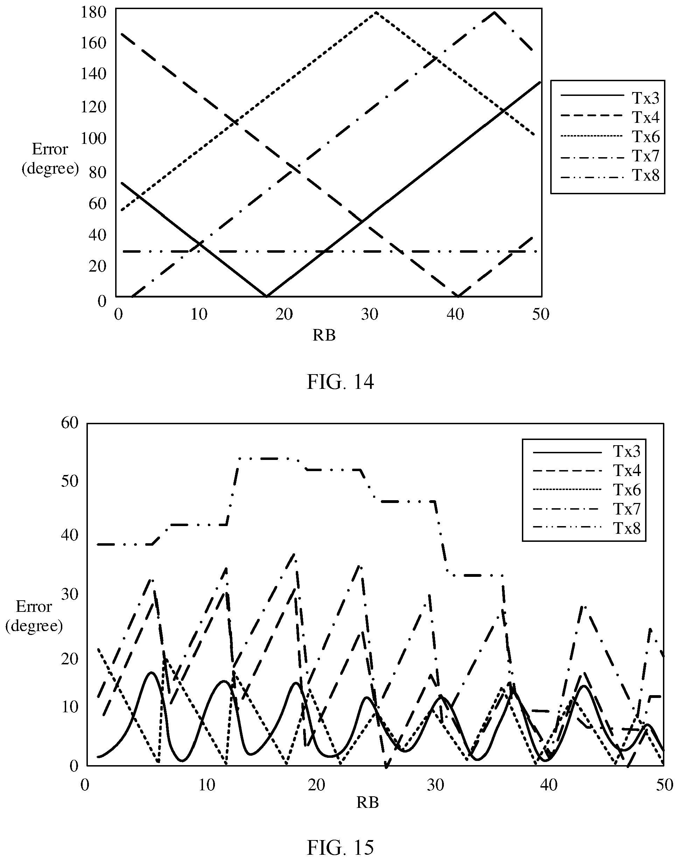

FIG. 14 and FIG. 15 are respectively schematic diagrams of errors of phase estimation based on a wideband PMI (namely, a wideband PMI fed back by a terminal device) and a subband PMI (namely, a subband PMI fed back by a terminal device) obtained when there is an inter-channel delay difference. In FIG. 14 and FIG. 15, a horizontal axis represents a quantity of resource blocks (resource block, RB), and a vertical axis represents an error of an estimated phase. In FIG. 14 and FIG. 15, Tx3 represents the third channel, Tx4 represents the fourth channel, Tx5 represents the fifth channel, Tx6 represents the sixth channel, Tx7 represents the seventh channel, and Tx8 represents the eighth channel. It is assumed that the delay difference between channels is 65 nanoseconds (ns). It can be learned from FIG. 14 and FIG. 15 that, phase calculation is performed by using the subband PMI fed back by the terminal device, so that impact caused by the inter-channel delay difference can be reduced. Alternatively, it may be understood that the network device performs subband-based phase calculation and compensation by using the subband PMI of the terminal device, to compensate for the inter-channel delay difference.

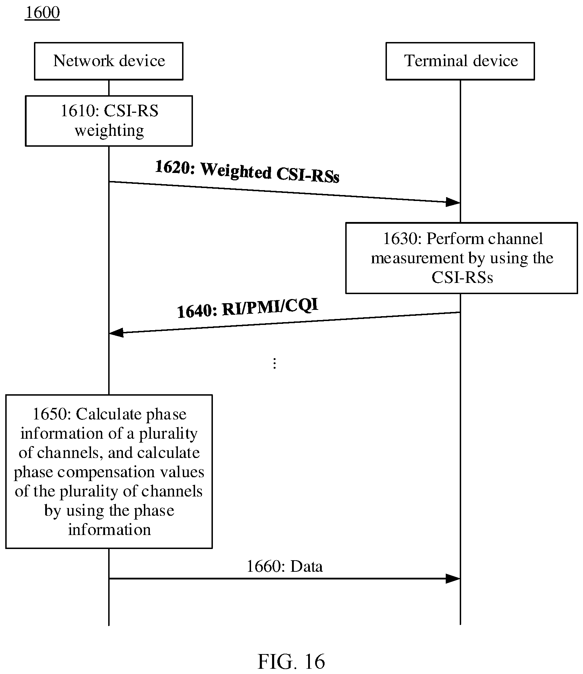

The foregoing describes embodiments of this application from two aspects. For ease of understanding, an example in which the first communication device is a network device, the second communication device is a terminal device, and that the reference signals are CSI-RSs is used to provide a possible procedure with reference to FIG. 16.

For example, FIG. 16 is a schematic flowchart of a communication method 1600 applicable to an embodiment of this application. The method 1600 may include the following steps:

1610: A network device performs weighting processing on CSI-RSs.

For example, the network device multiplies a CSI-RS by a calibration weight, for example, a complex number value.

1620: The network device sends weighted CSI-RSs to a terminal device. Correspondingly, the terminal device receives the weighted CSI-RSs.

In step 1620, the network device may send a plurality of weighted CSI-RSs to the terminal device through a plurality of channels.

It should be understood that in FIG. 16, one terminal device is used as an example for description. This is not limited herein. For example, the network device may send weighted CSI-RSs to a plurality of terminal devices.

In step 1620, the network device may also divide channels in two polarization directions into two groups, and each group is trained separately. For details, refer to the description in manner 3.

In step 1620, for weighted CSI-RSs, the network device may continuously send the CSI-RSs for a plurality of times by using one calibration weight, and then send CSI-RSs weighted by using a next calibration weight. For details, refer to the description in manner 4.

1630: The terminal device performs channel measurement by using the CSI-RSs.

The terminal device performs channel measurement by using the received weighted CSI-RSs, and quantizes measured information, for example, quantizes the measured information into an RI/PMI/CQI.

1640: The terminal device feeds back the RI/PMI/CQI to the network device.

The terminal device may send one or more of the following to the network device: a PMI, an RI, and a CQI.

For example, in step 1640, a feedback mode of the terminal device may be a subband feedback mode, or may include a wideband feedback mode and a subband feedback mode.

It should be understood that FIG. 16 is described by using an example in which the network device sends CSI-RSs to the terminal device once. It should be understood that the network device may send the CSI-RSs to the terminal device for a plurality of times, and each time may be performed according to step 1610 to step 1640.

1650: The network device calculates phase information of a plurality of channels, and calculates phase compensation values of the plurality of channels by using the phase information.

The network device calculates a phase of each of the plurality of channels based on channel measurement information fed back by the terminal device, and calculates phase compensation values of some or all of the plurality of channels based on the phase of each channel. For example, the network device calculates, based on a reference phase difference, a phase compensation value of a channel other than a reference channel in the plurality of channels. When calculating the phase and the phase compensation value, the network device may perform calculation in one or more of manner 1 to manner 4.

For a specific processing process of the network device, refer to the description in aspect 1. Details are not described herein again.

1660: The network device sends data to the terminal device.

When sending the data to the terminal device, the network device performs, by using the phase compensation value, phase compensation on data sent on each channel.

The foregoing describes a procedure applicable to this embodiment of this application with reference to FIG. 16. According to this embodiment of this application, a phase difference can be calibrated without depending on a calibration port on an antenna side, a calibration channel on an RRU side, or an RPCU, so that hardware costs can be reduced. In addition, compared with ideal channel phase calibration, performance of channel phase calibration performed by using this embodiment of this application is basically lossless.

It should be understood that this embodiment of this application is mainly described by using an example in which the phase difference meets the following condition: In a same polarization direction, phase differences are equal, and in different polarization directions, phase difference values are equal. This is not strictly limited herein. During actual use, the preset condition may be determined based on an actual situation, and then the manner provided in this embodiment of this application is used, so that phase differences meet a specific preset condition.

It should be further understood that this embodiment of this application is mainly described by using phase calibration as an example. For example, channel information is restored through collaboration between a network device and a terminal device, to calculate phases of a plurality of channels and phases that need to be compensated, and compensate a corresponding to-be-compensated phase to a sent data signal when sending data. It should be understood that solutions in embodiments of this application may be applied to another technical field in which calibration is needed.

It should be further understood that in some of the foregoing embodiments, an example in which the first communication device is a network device and the second communication device is a terminal device is used for description. This is not limited herein. When the first communication device is a terminal device and the second communication device is a network device, the foregoing solution may also be used.

It should be further understood that formulas used in embodiments of this application are merely examples for description, and do not limit the protection scope of embodiments of this application. In a process of calculating the foregoing related parameters, calculation may also be performed according to the foregoing formulas, or calculation may be performed based on a variation of the foregoing formulas, or calculation may be performed in another manner to meet a result of calculation of the formulas.

It may be understood that, in the foregoing method embodiments, methods and operations implemented by a communication device (for example, a network device or a terminal device) may alternatively be implemented by a component (for example, a chip or a circuit) that can be used in the communication device.

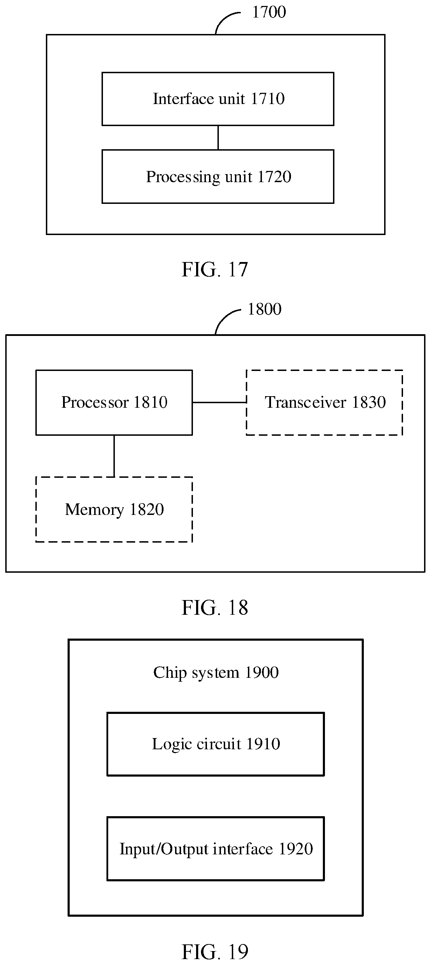

The foregoing describes in detail the method in this application with reference to FIG. 6 to FIG. 16. The following describes in detail an apparatus in this application with reference to FIG. 17 to FIG. 20. It should be understood that descriptions of apparatus embodiments correspond to descriptions of the method embodiments. Therefore, for content not described in detail, refer to the method embodiments. For brevity, details are not described herein again.

FIG. 17 is a schematic block diagram of a communication apparatus 1700 according to an embodiment of this application. The apparatus 1700 includes an interface unit 1710 and a processing unit 1720. The interface unit 1710 may implement a corresponding communication function, and the processing unit 1720 is configured to perform data processing. The interface unit 1710 may also be referred to as a communication interface, a communication unit, or a transceiver unit. It should be understood that, unless otherwise specified, operations such as sending and receiving in this application may be more generally understood as operations such as output and input, instead of sending and receiving operations directly performed by a radio frequency circuit and an antenna, if the operations do not conflict with actual functions or internal logic of the operations in related descriptions.

Optionally, the apparatus 1700 may further include a storage unit. The storage unit may be configured to store instructions and/or data. The processing unit 1720 may read the instructions and/or data in the storage unit, so that the apparatus implements the foregoing method embodiments.

The apparatus 1700 may be configured to perform an action performed by the communication device (for example, the network device or the terminal device) in the foregoing method embodiments. In this case, the apparatus 1700 may be a communication device or a component that can be configured in a communication device. The interface unit 1710 is configured to perform a receiving and sending-related operation on a communication device side in the foregoing method embodiments. The processing unit 1720 is configured to perform a processing-related operation on a communication device side in the foregoing method embodiments.

In a design, the apparatus 1700 is configured to perform an action performed by the first communication device in the foregoing method embodiments.

In a possible implementation, the interface unit 1710 is configured to send reference signals to a communication device through a plurality of channels, where the reference signals are used for channel measurement; the interface unit 1710 is further configured to receive channel measurement information from the communication device; the processing unit 1720 is configured to obtain a phase difference between a first channel and a second channel based on the channel measurement information, where the plurality of channels include the first channel and the second channel; and the processing unit 1720 is further configured to obtain, based on the phase difference between the first channel and the second channel, a phase compensation value of a channel other than the first channel and the second channel.

In some possible implementations of the apparatus 1700, the interface unit 1710 is further configured to send data to one or more communication devices through the plurality of channels, where a phase of the channel other than the first channel and the second channel in the plurality of channels is a phase that is compensated by using the phase compensation value.

In some possible implementations of the apparatus 1700, that the processing unit 1720 is configured to obtain a phase difference between a first channel and a second channel based on the channel measurement information includes: The processing unit 1720 is configured to: obtain, based on the channel measurement information, an eigenvector corresponding to a correlation matrix between the plurality of channels, and obtain the phase difference between the first channel and the second channel based on elements that are in the eigenvector and that correspond to the first channel and the second channel; and that the processing unit 1720 is further configured to obtain, based on the phase difference between the first channel and the second channel, the phase compensation value of a channel other than the first channel and the second channel includes: The processing unit 1720 is further configured to obtain, based on the phase difference between the first channel and the second channel and the element that is in the eigenvector and that corresponds to the channel other than the first channel and the second channel, the phase compensation value of the channel other than the first channel and the second channel.

In some possible implementations of the apparatus 1700, that the interface unit 1710 is configured to send reference signals to a communication device through a plurality of channels includes: The interface unit 1710 is configured to send the reference signals to the communication device through the plurality of channels in a plurality of time periods, where the channel measurement information includes channel measurement information corresponding to the reference signals sent in the plurality of time periods.

In some possible implementations of the apparatus 1700, that the interface unit 1710 is configured to send reference signals to a communication device through a plurality of channels includes: The interface unit 1710 is configured to send the reference signals to the plurality of communication devices through the plurality of channels; and that the interface unit 1710 is further configured to receive channel measurement information from the communication device includes: The interface unit 1710 is further configured to receive channel measurement information from the plurality of communication devices.

In some possible implementations of the apparatus 1700, the plurality of channels include a channel in a first polarization direction and a channel in a second polarization direction; and that the interface unit 1710 is configured to send reference signals to a communication device through a plurality of channels includes: The interface unit 1710 is configured to send reference signals to the communication device through the channel in the first polarization direction in a first time period, and send reference signals to the communication device through the channel in the second polarization direction in a second time period.

In some possible implementations of the apparatus 1700, that the interface unit 1710 is configured to send reference signals to a communication device through a plurality of channels includes: The interface unit 1710 is configured to send reference signals to the communication device X times through the plurality of channels, where the reference signals are reference signals obtained after weighting is performed based on a same calibration weight, and X is an integer greater than 1; that the interface unit is further configured to receive channel measurement information from the communication device includes: The interface unit 1710 is further configured to receive channel measurement information from the communication device X times, where the received X times of channel measurement information respectively correspond to the X sent reference signals; that the processing unit 1720 is configured to obtain a phase difference between a first channel and a second channel based on the channel measurement information includes: The processing unit 1720 is configured to obtain the phase difference between the first channel and the second channel based on channel measurement information received Y times in X times, where Y is an integer greater than 1 or equal to 1 and less than X.

The apparatus 1700 may implement steps or procedures performed by the first communication device in the method embodiments corresponding to embodiments of this application. The apparatus 1700 may include units configured to perform methods performed by the first communication device in FIG. 6 to FIG. 17. In addition, the units in the apparatus 1700 and the foregoing other operations and/or functions are together used to implement corresponding procedures in the method embodiments of the network device in FIG. 6 to FIG. 17.

When the apparatus 1700 is configured to perform the method 600 in FIG. 6, the interface unit 1710 may be configured to perform steps 610 to 620 in the method 600, and the processing unit 1720 may be configured to perform processing steps in the method 600, for example, step 630 and step 640.

When the apparatus 1700 is configured to perform the method 1600 in FIG. 16, the interface unit 1710 may be configured to perform step 1620, step 1640, and step 1660 in the method 1600. The processing unit 1720 may be configured to perform processing steps in the method 1600, for example, step 1610 and step 1650.

It should be understood that a specific process in which each unit performs the foregoing corresponding step has been described in detail in the foregoing method embodiments. For brevity, details are not described herein again.

The processing unit 1720 in the foregoing embodiment may be implemented by at least one processor or a processor-related circuit. The interface unit 1710 may be implemented by a transceiver or a transceiver-related circuit. The storage unit may be implemented by at least one memory.

As shown in FIG. 18, an embodiment of this application further provides a communication apparatus 1800. The apparatus 1800 includes a processor 1810. The processor 1810 is coupled to the memory 1820. The memory 1820 is configured to store a computer program or instructions and/or data. The processor 1810 is configured to execute the computer program or the instructions and/or the data stored in the memory 1820, so that the method in the foregoing method embodiments is performed.

Optionally, there may be one or more processors 1810 included in the apparatus 1800.

Optionally, as shown in FIG. 18, the apparatus 1800 may further include a memory 1820.

Optionally, there may be one or more memories 1820 included in the apparatus 1800.

Optionally, the memory 1820 may be integrated with the processor 1810, or may be disposed separately.

Optionally, as shown in FIG. 18, the apparatus 1800 may further include a transceiver 1830. The transceiver 1830 is configured to receive and/or send a signal. For example, the processor 1810 is configured to control the transceiver 1830 to receive and/or send a signal.

In a solution, the apparatus 1800 is configured to implement operations performed by the communication device (for example, the network device or the terminal device) in the foregoing method embodiments.

For example, the processor 1810 is configured to perform a processing-related operation performed by the first communication device in the foregoing method embodiments, and the transceiver 1830 is configured to perform a receiving/sending-related operation performed by the first communication device in the foregoing method embodiments.

An embodiment of this application further provides a chip system 1900, as shown in FIG. 19. The chip system 1900 (or may be referred to as a processing system) includes a logic circuit 1910 and an input/output interface (input/output interface) 1920. The logic circuit is configured to be coupled to the input interface, and transmit a data parameter through the input/output interface, to perform the method in the foregoing method embodiments. A device in which the chip system 1900 is installed may implement the method and functions in embodiments of this application. For example, the logic circuit 1910 may be a processing circuit in the chip system 1900, to control a device on which the chip system 1900 is installed, or may be coupled to a storage unit, and invoke instructions in the storage unit, so that the device can implement the method and functions in embodiments of this application. The input/output interface 1920 may be an input/output circuit in the chip system 1900, to output information processed by the chip system 1900, or input to-be-processed data or signaling information to the chip system 1900 for processing.

In a solution, the chip system 1900 is configured to implement operations performed by the communication device (for example, the network device or the terminal device) in the foregoing method embodiments.

For example, the logic circuit 1910 is configured to perform a processing-related operation performed by the first communication device in the foregoing method embodiments, and the input/output interface 1920 is configured to perform a receiving/sending-related operation performed by the first communication device in the foregoing method embodiments.

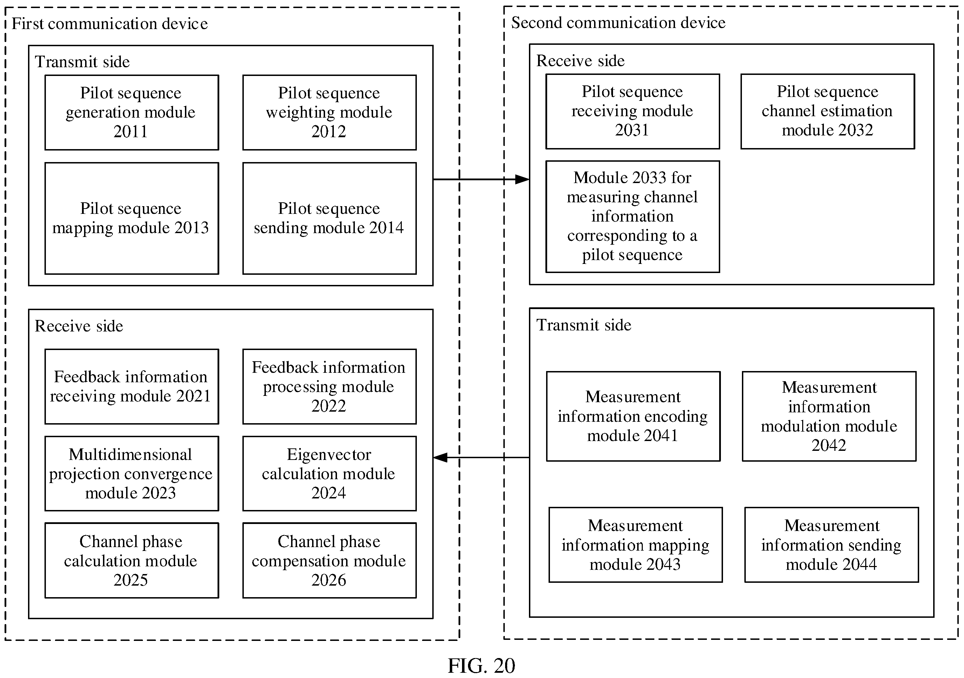

An embodiment of this application further provides a communication system 2000, as shown in FIG. 20. The system 2000 may include a first communication device.

In a possible design, a transmit side of the first communication device may include the following modules: a pilot sequence generation module 2011, a pilot sequence weighting module 2012, a pilot signal mapping module 2013, and a pilot signal sending module 2014. The pilot sequence generation module 2011 may be configured to generate a pilot signal used to measure a phase. The pilot sequence weighting module 2012 may be configured to perform weighting processing on a pilot signal. The pilot signal mapping module 2013 may be configured to map a weighted pilot signal to a resource, to send the weighted pilot signal to a terminal device. The pilot signal sending module 2014 may be configured to send a weighted pilot signal to a terminal device.

In still another possible design, a receive side of the first communication device may include the following modules: a feedback information receiving module 2021, a feedback information processing module 2022, a multidimensional projection convergence module 2023, an eigenvector calculation module 2024, a channel phase calculation module 2025, and a channel phase compensation module 2026. The feedback information receiving module 2021 may be configured to receive measurement information fed back by a terminal device. The feedback information processing module 2022 may be configured to perform processing such as channel estimation/equalization/demodulation/decoding on received measurement information. The multidimensional projection convergence module 2023 may be configured to calculate a correlation matrix between channels by using the foregoing Formula 1. The eigenvector calculation module 2024 may be configured to calculate an eigenvector of a correlation matrix. The channel phase calculation module 2025 may be configured to calculate a phase of a channel. The channel phase compensation module 2026 may be configured to calculate a phase compensation value of a channel, and may be further configured to compensate, when data is sent, each channel for a phase compensation value obtained through calculation based on subband compensation.

Optionally, the system 2000 may further include a second communication device.

In a possible design, a receive side of the second communication device may include the following modules: a pilot sequence receiving module 2031, a pilot sequence channel estimation module 2032, and a module 2033 for measuring channel information corresponding to a pilot sequence. The pilot sequence receiving module 2031 may be configured to receive a pilot signal sent by a network device. The pilot sequence channel estimation module 2032 may be configured to perform channel estimation based on a pilot signal. The module 2033 for measuring channel information corresponding to a pilot sequence may be configured to measure phase information corresponding to each channel.

In still another possible design, a transmit side of the second communication device may include the following modules: a measurement information encoding module 2041, a measurement information modulation module 2042, a measurement information mapping module 2043, and a measurement information sending module 2044. The measurement information encoding module 2041 may be configured to perform encoding processing on measurement information to be fed back. The measurement information modulation module 2042 may be configured to perform modulation processing on measurement information to be fed back. The measurement information mapping module 2043 may be configured to map measurement information to be fed back to a transmission resource. The measurement information sending module 2044 may be configured to feed back measurement information to a network device.

It should be understood that division of the modules in the first communication device and the second communication device is merely logical function division, and may be other division during actual implementation. In addition, the foregoing modules are merely examples for description. For example, the first communication device or the second communication device may further include more modules.

An embodiment of this application further provides a computer-readable storage medium. The computer-readable storage medium stores computer instructions used to implement the method performed by the communication device (for example, the network device or the terminal device) in the foregoing method embodiments.

For example, when the computer program is executed by a computer, the computer implements the method executed by the first communication device in the foregoing method embodiments.

An embodiment of this application further provides a computer program product including instructions. When the instructions are executed by a computer, the computer implements the method performed by the communication device (for example, the network device or the terminal device) in the foregoing method embodiments.

An embodiment of this application further provides a communication system. The communication system includes the first communication device and the second communication device in the foregoing embodiments.

For explanations and beneficial effects of related content of any one of the apparatuses provided above, refer to the corresponding method embodiment provided above. Details are not described herein again.

It should be understood that, the processor in this embodiment of this application may be a central processing unit (central processing unit, CPU), or may further be another general-purpose processor, a digital signal processor (digital signal processor, DSP), an application-specific integrated circuit (application specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the foregoing described apparatus embodiment is merely an example. For example, the unit division is merely logical function division and may be another division during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The units described as separate parts may or may not be physically separate, and parts displayed as units may or may not be physical units, in other words, may be located in one position, or may be distributed on a plurality of network units. A part or all of the units may be selected based on actual requirements to implement the solutions provided in this application.

In addition, function units in embodiments of this application may be integrated into one unit, each of the units may exist alone physically, or two or more units are integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The available medium may be a magnetic medium (for example, a floppy disk, a hard disk, or a magnetic tape), an optical medium (for example, a DVD), a semiconductor medium (for example, a solid-state drive solid-state disk, SSD), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement readily figured out by a person skilled in the art in the technical scope disclosed in this application shall fall in the protection scope of this application. Therefore, the protection scope of this application shall be subject to the protection scope of the claims.

**Claims**

1. A communication method, comprising:

    sending reference signals to a communication device through a plurality of channels, wherein the reference signals are used for channel measurement;
    receiving channel measurement information from the communication device;
    obtaining a phase difference between a first channel and a second channel based on the channel measurement information, wherein the plurality of channels comprise the first channel and the second channel; and
    obtaining, based on the phase difference between the first channel and the second channel, a phase compensation value of a channel other than the first channel and the second channel.

2. The method according to claim 1, wherein the method further comprises:
    sending data to one or more communication devices through the plurality of channels, wherein a phase of the channel other than the first channel and the second channel in the plurality of channels is a phase that is compensated by using the phase compensation value.

3. The method according to claim 1 or 2, wherein
    the obtaining a phase difference between a first channel and a second channel based on the channel measurement information comprises:

    obtaining, based on the channel measurement information, an eigenvector corresponding to a correlation matrix between the plurality of channels; and
    determining the phase difference between the first channel and the second channel based on elements that are in the eigenvector and that correspond to the first channel and the second channel; and
    the obtaining, based on the phase difference between the first channel and the second channel, a phase compensation value of a channel other than the first channel and the second channel comprises:

    obtaining, based on the phase difference between the first channel and the second channel and an element that is in the eigenvector and that corresponds to the channel other than the first channel and the second channel, the phase compensation value of the channel other than the first channel and the second channel.

4. The method according to any one of claims 1 to 3, wherein
the sending reference signals to a communication device through a plurality of channels comprises:

sending, in a plurality of time periods, the reference signals to the communication device through the plurality of channels, wherein
the channel measurement information comprises channel measurement information corresponding to the reference signals sent in the plurality of time periods.

5. The method according to any one of claims 1 to 4, wherein
the sending reference signals to a communication device through a plurality of channels comprises:

sending the reference signals to a plurality of communication devices through the plurality of channels; and
the receiving channel measurement information from the communication device comprises:
receiving channel measurement information from the plurality of communication devices.

6. The method according to any one of claims 1 to 5, wherein the plurality of channels comprise a channel in a first polarization direction and a channel in a second polarization direction; and
the sending reference signals to a communication device through a plurality of channels comprises:
sending, in a first time period, the reference signals to the communication device through the channel in the first polarization direction, and sending, in a second time period, the reference signals to the communication device through the channel in the second polarization direction.

7. The method according to any one of claims 1 to 6, wherein the sending reference signals to a communication device through a plurality of channels comprises:

sending the reference signals to the communication device X times through the plurality of channels, wherein the reference signals are reference signals obtained after weighting is performed based on a same calibration weight, and X is an integer greater than 1;
the receiving channel measurement information from the communication device comprises:
receiving the channel measurement information from the communication device X times, wherein the received X times of channel measurement information respectively correspond to the X times of sent reference signals; and
the obtaining a phase difference between a first channel and a second channel based on the channel measurement information comprises:
obtaining the phase difference between the first channel and the second channel based on channel measurement information received Y times of the X times, wherein Y is an integer greater than 1 or equal to 1 and less than X.

8. A communication apparatus, comprising an interface unit and a processing unit, wherein the interface unit is configured to send reference signals to a communication device through a plurality of channels, wherein the reference signals are used for channel measurement;

the interface unit is further configured to receive channel measurement information from the communication device;
the processing unit is configured to obtain a phase difference between a first channel and a second channel based on the channel measurement information, wherein the plurality of channels comprise the first channel and the second channel; and
the processing unit is further configured to obtain, based on the phase difference between the first channel and the second channel, a phase compensation value of a channel other than the first channel and the second channel.

9. The apparatus according to claim 8, wherein
the interface unit is further configured to send data to one or more communication devices through the plurality of channels, wherein a phase of the channel other than the first channel and the second channel in the plurality of channels is a phase that is compensated by using the phase compensation value.

10. The apparatus according to claim 8 or 9, wherein

that the processing unit is configured to obtain a phase difference between a first channel and a second channel based on the channel measurement information comprises:

the processing unit is configured to: obtain, based on the channel measurement information, an eigenvector corresponding to a correlation matrix between the plurality of channels; and determine the phase difference between the first channel and the second channel based on elements that are in the eigenvector and that correspond to the first channel and the second channel; and

that the processing unit is further configured to obtain, based on the phase difference between the first channel and the second channel, a phase compensation value of a channel other than the first channel and the second channel comprises:

the processing unit is further configured to obtain, based on the phase difference between the first channel and the second channel and an element that is in the eigenvector and that corresponds to the channel other than the first channel and the second channel, the phase compensation value of the channel other than the first channel and the second channel.

11. The apparatus according to any one of claims 8 to 10, wherein
that the interface unit is configured to send reference signals to a communication device through a plurality of channels comprises:

the interface unit is configured to send, in a plurality of time periods, the reference signals to the communication device through the plurality of channels; and
the channel measurement information comprises channel measurement information corresponding to the reference signals sent in the plurality of time periods.

12. The apparatus according to any one of claims 8 to 11, wherein
that the interface unit is configured to send reference signals to a communication device through a plurality of channels comprises:

the interface unit is configured to send the reference signals to a plurality of communication devices through the plurality of channels; and
that the interface unit is further configured to receive channel measurement information from the communication device comprises:

the interface unit is further configured to receive channel measurement information from the plurality of communication devices.

13. The apparatus according to any one of claims 8 to 12, wherein the plurality of channels comprise a channel in a first polarization direction and a channel in a second polarization direction; and
that the interface unit is configured to send reference signals to a communication device through a plurality of channels comprises:
the interface unit is configured to: send, in a first time period, the reference signals to the communication device through the channel in the first polarization direction, and send, in a second time period, the reference signals to the communication device through the channel in the second polarization direction.

14. The apparatus according to any one of claims 8 to 13, wherein
that the interface unit is configured to send reference signals to a communication device through a plurality of channels comprises:

the interface unit is configured to send the reference signals to the communication device X times through the plurality of channels, wherein the reference signals are reference signals obtained after weighting is performed based on a same calibration weight, and X is an integer greater than 1;
that the interface unit is further configured to receive channel measurement information from the communication device comprises:

the interface unit is further configured to receive the channel measurement information from the communication device X times, wherein the received X times of channel measurement information respectively correspond to the X times of sent reference signals; and

30

that the processing unit is configured to obtain a phase difference between a first channel and a second channel based on the channel measurement information comprises:

the processing unit is configured to obtain the phase difference between the first channel and the second channel based on channel measurement information received Y times of the X times, wherein Y is an integer greater than 1 or equal to 1 and less than X.

**15.** The apparatus according to any one of claims 8 to 14, wherein the processing unit is a processor, and the interface unit is a transceiver.

**16.** A communication apparatus, comprising:
a processor, configured to execute instructions stored in a memory, to enable the apparatus to perform the method according to any one of claims 1 to 7.

**17.** The apparatus according to claim 16, wherein
the apparatus comprises the memory.

**18.** The apparatus according to claim 16 or 17, wherein the apparatus comprises a communication interface, and the communication interface is configured to input and/or output information.

**19.** The apparatus according to any one of claims 16 to 18, wherein the apparatus is a chip.

**20.** A computer-readable storage medium, wherein the computer-readable storage medium stores a computer program or instructions, and when the computer program or the instructions is/are run on a computer, the computer is enabled to perform the method according to any one of claims 1 to 7.

**21.** A computer program product, wherein the computer program product comprises instructions for performing the method according to any one of claims 1 to 7.

FIG. 1

FIG. 2

FIG. 3

Throughput performance corresponding to different maximum phase differences

FIG. 4

Average throughput loss without calibration

FIG. 5

600

| First communication device | | Second communication device |
|---|---|---|

610: Send reference signals through a plurality of channels, where the reference signals are used for channel measurement

620: Channel measurement information

630: Obtain a phase difference between a first channel and a second channel based on the channel measurement information, where the plurality of channels include the first channel and the second channel

640: Obtain, based on the phase difference between the first channel and the second channel, a phase compensation value of a channel other than the first channel and the second channel

FIG. 6

$B_0$　　　　　$B_1$　　　　　　$B_{K-1}$

Network device

CSI-RS　　PMI$_0$　　　PMI$_1$　　　　　PMI$_{K-1}$

...

Terminal device

FIG. 7

Estimated phase of a channel
before compensation

$\alpha=\theta$

$\beta=\theta+\Delta$

$\gamma=\theta+2\Delta+\delta$

Feed back channel
measurement information

Phase of the channel
after compensation

$\alpha=\theta$

$\beta=\theta+\Delta$

$\mu=\theta+2\Delta$

FIG. 8

Quantized angle 0

Actual angle 45

A quantization error
reaches 45 degrees

A quantization
granularity is 90 degrees

Quantized angle
90

FIG. 9

MN  2MN

N+1        N+2                    2N

1  MN+1    2  MN+2              N  MN+N

FIG. 10

1    5        2    6        3    7        4    8

FIG. 11

Time period 1                    Time period 2

$B_0$   $B_1$   $B_2$   $B_{Q1-3}$   $B_{Q1-2}$   $B_{Q1-1}$        $B_0$   $B_1$   $B_2$   $B_{Q2-3}$   $B_{Q2-2}$   $B_{Q2-1}$

Phase measurement of a channel
in a first polarization direction

Phase measurement of a channel
in a second polarization direction

FIG. 12

$B_0$   $B_0$   $B_0$   $B_0$   $B_0$   $B_0$        $B_1$   $B_1$   $B_1$   $B_1$   $B_1$   $B_1$

Repeated sending X1 times                    Repeated sending X2 times

Extract Y1 times for
correlation matrix calculation

Extract Y2 times for
correlation matrix calculation

FIG. 13

FIG. 14

FIG. 15

1600

FIG. 16

1700

Interface unit 1710

Processing unit 1720

FIG. 17

1800

Processor 1810

Transceiver 1830

Memory 1820

FIG. 18

Chip system 1900

Logic circuit 1910

Input/Output interface 1920

FIG. 19

First communication device

Transmit side

| Pilot sequence generation module 2011 | Pilot sequence weighting module 2012 |
| Pilot sequence mapping module 2013 | Pilot sequence sending module 2014 |

Receive side

| Feedback information receiving module 2021 | Feedback information processing module 2022 |
| Multidimensional projection convergence module 2023 | Eigenvector calculation module 2024 |
| Channel phase calculation module 2025 | Channel phase compensation module 2026 |

Second communication device

Receive side

| Pilot sequence receiving module 2031 | Pilot sequence channel estimation module 2032 |
| Module 2033 for measuring channel information corresponding to a pilot sequence | |

Transmit side

| Measurement information encoding module 2041 | Measurement information modulation module 2042 |
| Measurement information mapping module 2043 | Measurement information sending module 2044 |

FIG. 20

## INTERNATIONAL SEARCH REPORT

| International application No. |
| --- |
| **PCT/CN2022/096722** |

| A. | CLASSIFICATION OF SUBJECT MATTER |
| --- | --- |
| | H04W 24/02(2009.01)i |

According to International Patent Classification (IPC) or to both national classification and IPC

| B. | FIELDS SEARCHED |
| --- | --- |

Minimum documentation searched (classification system followed by classification symbols)

H04W; H04B

Documentation searched other than minimum documentation to the extent that such documents are included in the fields searched

Electronic data base consulted during the international search (name of data base and, where practicable, search terms used)

CNTXT, ENTXTC, CNKI, ENTXT, VEN, IEEE, web of science: 多通道, 参考信号, 通道, 测量, 信道状态信息, 相位差, 补偿, 校正, 校准, 对准, multi-channel, RS, referecne signal, channel, measur+, detect+, channel state information, CSI, RI, CQI, PMI, phase difference, compensat+, calibrat+, alignment

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 103828270 A (HUAWEI TECHNOLOGIES CO., LTD.) 28 May 2014 (2014-05-28) description, paragraphs 3-100, and figures 1-2 | 1-21 |
| A | CN 103457651 A (HUAWEI TECHNOLOGIES CO., LTD.) 18 December 2013 (2013-12-18) entire document | 1-21 |
| A | CN 110460552 A (CHANGSHA YIDUN ELECTRONIC TECHNOLOGY CO., LTD.) 15 November 2019 (2019-11-15) entire document | 1-21 |
| A | JP 2020098966 A (DENSO CORP.) 25 June 2020 (2020-06-25) entire document | 1-21 |
| A | WO 2020000204 A1 (HUAWEI TECHNOLOGIES CO., LTD.) 02 January 2020 (2020-01-02) entire document | 1-21 |

☐ Further documents are listed in the continuation of Box C.    ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 July 2022** | **08 August 2022** |

| Name and mailing address of the ISA/CN | Authorized officer |
| --- | --- |
| China National Intellectual Property Administration (ISA/CN) No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/096722**

| Patent document cited in search report | | | Publication date (day/month/year) | Patent family member(s) | | | Publication date (day/month/year) |
|---|---|---|---|---|---|---|---|
| CN | 103828270 | A | 28 May 2014 | WO | 2014205740 | A1 | 31 December 2014 |
| | | | | CN | 103828270 | B | 25 November 2015 |
| CN | 103457651 | A | 18 December 2013 | JP | 2015519843 | A | 09 July 2015 |
| | | | | WO | 2013177961 | A1 | 05 December 2013 |
| | | | | US | 2015085690 | A1 | 26 March 2015 |
| | | | | IN | 201408707 | P4 | 01 July 2016 |
| | | | | CN | 103457651 | B | 24 August 2016 |
| | | | | JP | 5995030 | B2 | 21 September 2016 |
| | | | | US | 9661511 | B2 | 23 May 2017 |
| CN | 110460552 | A | 15 November 2019 | None | | | |
| JP | 2020098966 | A | 25 June 2020 | None | | | |
| WO | 2020000204 | A1 | 02 January 2020 | CN | 112368957 | A | 12 February 2021 |
| | | | | CN | 112368957 | B | 25 March 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110691655